# EUROPEAN PATENT APPLICATION

(11) **EP 4 836 565 A1**
(43) Date of publication of application: **04.11.2026**
(21) Application number: 23962651.8
(22) Date of filing: 27.12.2023
(51) Int. Cl.: H04W 72/1268

(54) **UPLINK CONTROL INFORMATION MAPPING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN)
(74) Representative: Penza, Giancarlo
(86) International application number: PCT/CN2023/142526
(87) International publication number: WO 2025/137969

(57) **Abstract**

The present application relates to an uplink control information (UCI) mapping method, a terminal device, and a network device. The method comprises: when a time-frequency resource of a reference signal overlaps a time-frequency resource of a PUSCH, a terminal device using a first mapping scheme to transmit UCI in the PUSCH. The embodiments of the present application can solve the problem of mapping of a UCI modulation signal in a PUSCH when a time-frequency resource of a reference signal overlaps a time-frequency resource of the PUSCH.

## Description

### TECHNICAL FIELD

The present disclosure relates to the field of communications, and more specifically, to a method for mapping uplink control information, a terminal device, and a network device.

### BACKGROUND

In related technologies, time-frequency resources of reference signals do not overlap with time-frequency resources of a Physical Uplink Shared Channel (PUSCH), and a dedicated Demodulation Reference Signal (DMRS) and data occupy different time-frequency resources. That is to say, same time-frequency resources may be used to transmit DMRS or data, but DMRS and data cannot be transmitted simultaneously; DMRS and data are orthogonal in time-frequency resources.

To improve transmission resource utilization, a non-orthogonal transmission scheme for DMRS and data has emerged, meaning that DMRS and data can be transmitted simultaneously on the same time-frequency resources, and the time-frequency resources of reference signals overlap with the time-frequency resources of the PUSCH. In this case, how a terminal device maps a modulated signal of Uplink Control Information (UCI) onto the PUSCH during data transmission is a technical problem to be solved.

### SUMMARY

Embodiments of the present disclosure provide a method for mapping UCI, a terminal device, and a network device, which can solve the problem of mapping a UCI modulated signal in the PUSCH when the time-frequency resources of reference signals overlap with the time-frequency resources of the PUSCH.

An embodiment of the present disclosure provides a method for mapping UCI, including:
transmitting, by a terminal device, UCI in a PUSCH by using a first mapping pattern, in a case where time-frequency resources of a reference signal overlap with time-frequency resources of the PUSCH.

An embodiment of the present disclosure provides a method for mapping UCI, including:
receiving, by a network device, UCI in a PUSCH by using a first mapping pattern, in a case where time-frequency resources of a reference signal overlap with time-frequency resources of the PUSCH.

An embodiment of the present disclosure provides a terminal device, including:
a transmission module configured to transmit UCI in a PUSCH by using a first mapping pattern, in a case where time-frequency resources of a reference signal overlap with time-frequency resources of the PUSCH.

An embodiment of the present disclosure provides a network device, including:
a receiving module configured to receive UCI in a PUSCH by using a first mapping pattern, in a case where time-frequency resources of a reference signal overlap with time-frequency resources of the PUSCH.

An embodiment of the present disclosure provides a terminal device, including: a transceiver, a processor, and a memory. The memory is configured to store a computer program, the transceiver is configured to communicate with other devices, and the processor is configured to invoke and run the computer program stored in the memory, so that the terminal device performs the foregoing method for mapping UCI.

An embodiment of the present disclosure provides a network device, including: a transceiver, a processor, and a memory. The memory is configured to store a computer program, the transceiver is configured to communicate with other devices, and the processor is configured to invoke and run the computer program stored in the memory, so that the network device performs the foregoing method for mapping UCI.

An embodiment of the present disclosure provides a chip, configured to implement the foregoing method for mapping UCI.

Specifically, the chip includes: a processor configured to invoke and run a computer program from a memory, so that a device installed with the chip performs the foregoing method for mapping UCI.

An embodiment of the present disclosure provides a computer-readable storage medium, configured to store a computer program, wherein the computer program, when running on a device, causes the device to perform the foregoing method for mapping UCI.

An embodiment of the present disclosure provides a computer program product including computer program instructions, wherein the computer program instructions cause a computer to perform the foregoing method for mapping UCI.

An embodiment of the present disclosure provides a computer program that, when running on a computer, causes the computer to perform the foregoing method for mapping UCI.

According to the embodiments of the present disclosure, in a case where the time-frequency resources of a reference signal overlap with the time-frequency resources of a PUSCH, a terminal device transmits UCI in the PUSCH by using a first mapping pattern, thereby solving the problem of mapping a UCI modulated signal on the PUSCH in a case where the time-frequency resources of the reference signal overlap with the time-frequency resources of the PUSCH.

### BRIEF DESCRIPTION OF THE DRAWINGS

FIG. 1 exemplarily shows a communication system 100.
FIG. 2 is a schematic flowchart of a method 200 for mapping UCI according to an embodiment of the present disclosure.
FIGS. 3A to 3G are schematic diagrams of mapping patterns according to Embodiment One of the present disclosure.
FIGS. 4A to 4I are schematic diagrams of mapping patterns according to Embodiment Two of the present disclosure.
FIGS. 5A to 5B are schematic diagrams of mapping patterns according to Embodiment Three of the present disclosure.
FIG. 6 is a schematic diagram of a mapping manner according to the present embodiment.
FIG. 7 is a schematic flowchart of a method 700 for mapping UCI according to an embodiment of the present disclosure.
FIG. 8 is a schematic block diagram of a terminal device 800 according to an embodiment of the present disclosure.
FIG. 9 is a schematic block diagram of a network device 900 according to an embodiment of the present disclosure.
FIG. 10 is a schematic structural diagram of a communication device 1000 according to an embodiment of the present disclosure.
FIG. 11 is a schematic structural diagram of a chip 1100 according to an embodiment of the present disclosure.
FIG. 12 is a schematic block diagram of a communication system 1200 according to an embodiment of the present disclosure.

### DETAILED DESCRIPTION

The technical solutions in the embodiments of the present disclosure will be described below with reference to the accompanying drawings in the embodiments of the present disclosure.

The technical solutions of the embodiments of the present disclosure may be applied to various communication systems, for example: a Long Term Evolution (LTE) system, an Advanced Long Term Evolution (LTE-A) system, a New Radio (NR) system, an evolved system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunication System (UMTS), a Wireless Local Area Networks (WLAN), Wireless Fidelity (WiFi), a 5th-Generation (5G) communication system, or other communication systems.

Generally, a conventional communication system supports a limited number of connections and is easy to implement. However, with the development of communication technologies, a mobile communication system will support not only conventional communication but also, for example, Device to Device (D2D) communication, Machine to Machine (M2M) communication, Machine Type Communication (MTC), Vehicle to Vehicle (V2V) communication, or Vehicle to everything (V2X) communication. The embodiments of the present disclosure may also be applied to these communication systems.

In an implementation, the communication system in the embodiments of the present disclosure may be applied to a Carrier Aggregation (CA) scenario, a Dual Connectivity (DC) scenario, or a Standalone (SA) networking scenario.

In an implementation, the communication system in the embodiments of the present disclosure may be applied to an unlicensed spectrum, where the unlicensed spectrum may also be considered as a shared spectrum; alternatively, the communication system in the embodiments of the present disclosure may be applied to a licensed spectrum, where the licensed spectrum may also be considered as a non-shared spectrum.

The embodiments of the present disclosure describe various embodiments with reference to a network device and a terminal device, where the terminal device may also be referred to as User Equipment (UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a station (STA) in a WLAN, a cellular phone, a cordless phone, a Session Initiation Protocol (SIP) phone, a Wireless Local Loop (WLL) station, a Personal Digital Assistant (PDA) device, a handheld device with a wireless communication function, a computing device, another processing device connected to a wireless modem, a vehicle-mounted device, a wearable device, a terminal device in a next-generation communication system such as an NR network, or a terminal device in a future evolved Public Land Mobile Network (PLMN) network.

In the embodiments of the present disclosure, the terminal device may be deployed on land, including indoors or outdoors, handheld, wearable, or vehicle-mounted; may also be deployed on water (such as a ship); and may also be deployed in the air (such as on an airplane, a balloon, and a satellite).

In the embodiments of the present disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self-driving, a wireless terminal device in remote medical treatment, a wireless terminal device in a smart grid, a wireless terminal device in transportation safety, a wireless terminal device in a smart city, or a wireless terminal device in a smart home.

By way of example and not limitation, in the embodiments of the present disclosure, the terminal device may also be a wearable device. A wearable device may also be referred to as a wearable smart device, which is a general term for devices that are intelligently designed and developed for daily wear by applying wearable technology and can be worn, such as glasses, gloves, watches, clothing, shoes, and the like. A wearable device is a portable device that is directly worn on the body or integrated into clothes or accessories of a user. A wearable device is not only a hardware device, but also implements powerful functions through software support, data interaction, and cloud interaction. In a broad sense, wearable smart devices include full-featured and large-sized devices that can implement complete or partial functions without relying on a smart phone, such as smart watches or smart glasses, and devices that only focus on a certain type of application function and need to be used together with other devices such as a smart phone, such as various smart bracelets and smart jewelry for physical sign monitoring.

In the embodiments of the present disclosure, the network device may be a device configured to communicate with a mobile device. The network device may be an Access Point (AP) in a WLAN, an evolved Node B (eNB or eNodeB) in LTE, a relay station or an access point, a vehicle-mounted device, a wearable device, a network device (gNB) in an NR network, a network device in a future evolved PLMN network, or a network device in an NTN network.

By way of example and not limitation, in the embodiments of the present disclosure, the network device may have mobility. For example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. Optionally, the network device may also be a base station deployed on land, water, or the like.

In the embodiments of the present disclosure, the network device may provide a service for a cell, and a terminal device communicates with the network device by using transmission resources (for example, frequency-domain resources, or spectrum resources) used by the cell. The cell may be a cell corresponding to the network device (for example, a base station), and the cell may belong to a macro base station or a base station corresponding to a small cell. The small cell herein may include a Metro cell, a Micro cell, a Pico cell, a Femto cell, and the like. These small cells are characterized by a small coverage area and low transmit power, and are suitable for providing high-rate data transmission services.

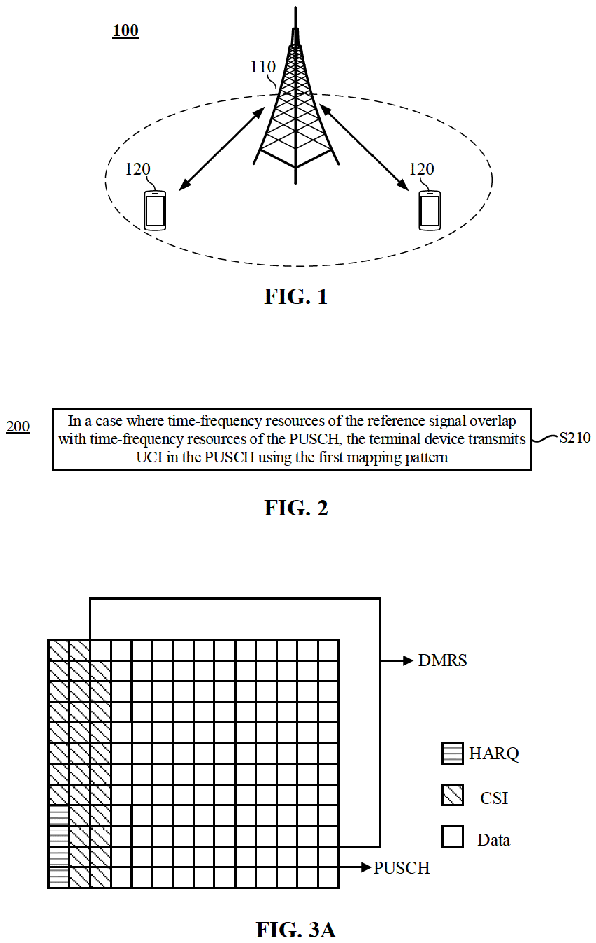

FIG. 1 exemplarily shows a communication system 100. The communication system includes one network device 110 and two terminal devices 120. In an implementation, the communication system 100 may include a plurality of network devices 110, and the coverage area of each network device 110 may include terminal devices 120 of other quantities, which is not limited in the embodiments of the present disclosure.

In an implementation, the communication system 100 may further include other network entities such as a Mobility Management Entity (MME) and an Access and Mobility Management Function (AMF), which is not limited in the embodiments of the present disclosure.

The network device may further include an access network device and a core network device. That is, the wireless communication system further includes a plurality of core networks configured to communicate with the access network device. The access network device may be a macro base station, a micro base station (also referred to as a "small cell"), a pico base station, an access point (AP), a transmission point (TP), a new generation Node B (gNodeB), or the like in an evolved Node B (eNB or e-NodeB) in an LTE system, a next radio (NR) system, or an authorized auxiliary access long-term evolution (LAA-LTE) system.

It should be understood that a device having a communication function in a network/system in the embodiments of the present disclosure may be referred to as a communication device. Taking the communication system shown in FIG. 1 as an example, the communication device may include a network device and a terminal device having a communication function, and the network device and the terminal device may be specific devices in the embodiments of the present disclosure, which are not described herein again. The communication device may further include other devices in the communication system, such as other network entities like a network controller and a mobility management entity, which is not limited in the embodiments of the present disclosure.

It should be understood that the terms "system" and "network" may be used interchangeably herein. The term "and/or" herein is merely an association relationship describing associated objects, indicating that three relationships may exist, for example, A and/or B may indicate: A exists alone, A and B exist simultaneously, and B exists alone. In addition, the character "/" herein generally indicates that the associated objects are in an "or" relationship.

It should be understood that the "indication" mentioned in the embodiments of the present disclosure may be a direct indication, an indirect indication, or an indication of an association relationship. For example, A indicates B, which may mean that A directly indicates B, for example, B may be obtained through A; or A indirectly indicates B, for example, A indicates C and B may be obtained through C; or an association relationship exists between A and B.

In the description of the embodiments of the present disclosure, the term "corresponding" may indicate that there is a direct correspondence or an indirect correspondence between the two, an association relationship between the two, or a relationship between indication and indicated, configuration and configured, and the like.

To facilitate understanding of the technical solutions of the embodiments of the present disclosure, related technologies of the embodiments of the present disclosure are described below. The following related technologies, as optional solutions, may be arbitrarily combined with the technical solutions of the embodiments of the present disclosure, and all of them fall within the protection scope of the embodiments of the present disclosure.

### 1. DMRS

In a wireless communication system (such as WiFi, 4G (LTE), 5G (NR), 6G, and the like), a basic working process may include the following steps:
At a transmit end, bitstream information to be transmitted is subjected to channel coding (and possibly corresponding rate matching) to obtain coded bits; and then modulation is performed to obtain modulated symbols (for example, modulation may adopt one or more of BPSK, QPSK, 16QAM, 64QAM, 256QAM, 512QAM, 1024QAM, 2048QAM, and 4096QAM). Next, the modulated symbols and a dedicated DMRS are inserted into corresponding time-frequency resources (for example, inserted into corresponding Resource Elements (REs)), and subsequent processing is performed to obtain OFDM symbols, SC-FDMA symbols, or other forms of multi-carrier symbols.

At a receive end, a receiver performs channel estimation by measuring the DMRS, demodulates the modulated symbols, then performs channel decoding, and then obtains transmitted bits. The foregoing steps may be jointly performed in an iterative manner (for example, information obtained by a decoding module may be used for a module including channel estimation and/or a module including modulated symbol demodulation), and are not necessarily strictly performed in the foregoing sequence.

The foregoing process is applicable to downlink transmission (DL transmission) (that is, transmission from a network to a terminal), uplink transmission (UL transmission) (that is, transmission from a terminal to a network), and sidelink transmission (SL transmission) (that is, transmission between terminals). To obtain bit information transmitted by the transmit end, the receive end needs to use a demodulation reference signal. The transmission herein may be data transmission or control information transmission; for example, transmission of PDSCH, PUSCH, PSSCH, PDCCH, PUCCH, PSSCH, PSCCH, PSFCH, or the like. In the subsequent content of the present disclosure, for ease of description, data is usually used for description. It should be noted that the data described in the present disclosure includes not only general data (for example, data transmitted in a PDSCH) but also control information.

In an existing communication system, DMRS and data occupy different REs (that is, there is no overlap in RE time-frequency resources). That is to say, one RE may be used to place DMRS or data, but the RE cannot be used to simultaneously place DMRS and data. Therefore, data and DMRS are orthogonal in time-frequency resources (that is, there is no overlap. Such DMRS is simply referred to as orthogonal DMRS). When a terminal (UE) moves at a relatively high speed, to improve channel estimation performance, DMRS usually needs to occupy more symbols in the time domain, that is, DMRS needs to occupy more RE resources. In this case, RE resources available for data are reduced.

### 2. Multiplexing of UCI

UCI includes Hybrid Automatic Repeat reQuest (HARQ)-Acknowledge (ACK), Channel State Information (CSI), and Scheduling Request (SR). UCI may be transmitted on a PUCCH channel or multiplexed onto a PUSCH for transmission. CSI includes aperiodic CSI sent on a PUSCH channel, periodic CSI transmitted on a PUCCH channel, and semi-persistent CSI transmitted on a PUCCH channel or a PUSCH channel. CSI includes CSI part 1 and CSI part 2.

In a legacy UCI multiplexing technology, UCI can only be transmitted on non-DMRS symbols, and a mapping manner on symbols transmitting UCI depends on a total available quantity of REs for transmitting UCI and a total quantity of REs required by UCI.

It can be seen that in an existing legacy solution, pilot and data are orthogonally arranged in time, frequency, and code domain resources. That is, in a case where total transmission resources are fixed, an increase in resource overhead required by pilot means a reduction in resources for data transmission, and data transmission resource utilization is relatively low.

One method for addressing the foregoing problem is to transmit pilot and data in a non-orthogonal manner, for example, transmit pilot and data simultaneously on the same time-domain and frequency-domain resources, and then use an advanced receiver (such as an Artificial Intelligence (AI) receiver) to implement effective channel estimation or data reception from mixed transmission of pilot and data.

When pilot and data are transmitted in a non-orthogonal manner, time-frequency resources of a reference signal (such as DMRS) overlap with time-frequency resources of a PUSCH. In this case, how to map UCI modulated symbols to REs of the PUSCH is a problem to be solved.

FIG. 2 is a schematic flowchart of a method for mapping UCI 200 according to an embodiment of the present disclosure. The method may be optionally applied to the system shown in FIG. 1, but is not limited thereto. The method includes at least part of the following content.

At operation S210, in a case where time-frequency resources of a reference signal overlap with time-frequency resources of a PUSCH, a terminal device transmits UCI in the PUSCH by using a first mapping pattern.

The first mapping pattern can solve the problem of mapping UCI modulated symbols in a case where the time-frequency resources of the reference signal overlap with the time-frequency resources of the PUSCH.

This embodiment may be applied to the following two cases:
Case 1: All time-frequency resources of the reference signal may overlap with the time-frequency resources of the PUSCH, that is, DMRS and data are non-orthogonal in time-frequency resources.

Case 2: Part of time-frequency resources of the reference signal may overlap with the time-frequency resources of the PUSCH, and the other part of time-frequency resources of the reference signal do not overlap with the time-frequency resources of the PUSCH; that is, part of DMRS and data are non-orthogonal in time-frequency resources, and the other part of DMRS and data are orthogonal in time-frequency resources.

This embodiment may be applied to the time-frequency resources in the foregoing case 1 and the time-frequency resources of which DMRS and data are non-orthogonal in the foregoing case 2.

In an implementation, UCI includes HARQ, CSI, or RS.

The first mapping patterns used for different UCI may be the same or different. For example, the first mapping pattern for HARQ is the same as or different from the first mapping pattern for CSI.

Further, the first mapping patterns for different content included in HARQ and/or different content included in CSI may also be the same or different. For example, HARQ may include legacy HARQ and HARQ related to a neural network system, where the first mapping pattern used for legacy HARQ may be the same as or different from the first mapping pattern used for HARQ related to a neural network system. For another example, CSI includes one or more of CSI part 1, CSI part 2, and CSI related to a neural network system; CSI part 1 includes a Rank Indicator (RI) and a Channel Quality Indicator (CQI), and CSI part 1 includes a PMI. The first mapping pattern used for CSI part 1, the first mapping pattern used for CSI part 2, and the first mapping pattern used for CSI related to a neural network system may be the same or different. In the embodiments of the present disclosure, CSI may include one or more of a CSI-RS Resource Indicator (CRI), RI, CQI, and a Precoding Matrix Indicator (PMI).

By using the foregoing mapping manner, various different UCI modulated symbols can be flexibly mapped.

In addition, a predetermined mapping order may be used for different content included in UCI. For example, the mapping order of UCI is: HARQ is mapped first, and then CSI is mapped; CSI is not mapped to an RE where HARQ is located. That is, HARQ modulated symbol(s) is/are first mapped to the PUSCH, and then CSI modulated symbol(s) is/are mapped to the PUSCH. For example, when mapping a CSI modulated symbol, if an RE determined according to the first mapping pattern of CSI is occupied by an HARQ modulated symbol, the CSI modulated symbol is mapped to a next RE. Such a mapping order can preferentially map HARQ modulated symbol(s). For another example, the mapping order of various content in CSI is: CSI part 1 is mapped first, and then CSI part 2 is mapped; CSI part 2 is not mapped to an RE where CSI part 1 is located.

In the embodiments of the present disclosure, the first mapping pattern includes one or more of the following content:
a mapping start position of a plurality of UCI modulated symbols;
a mapping manner of the plurality of UCI modulated symbols;
a grouping situation of the plurality of UCI modulated symbols;
a mapping situation of each group of the plurality of UCI modulated symbols.

In some implementations, the mapping start position of the plurality of UCI modulated symbols may include one or more of the following:
an RE corresponding to a first symbol of the PUSCH in the time domain and a first subcarrier of a PUSCH bandwidth;
an RE corresponding to a last symbol of the PUSCH in the time domain and the first subcarrier of the PUSCH bandwidth;
an RE corresponding to an nth symbol of the PUSCH in the time domain and the first subcarrier of the PUSCH bandwidth, where n is a positive integer.

The PUSCH occupies certain time-frequency resources, where the PUSCH includes a plurality of symbols in the time domain, and the PUSCH bandwidth includes a plurality of subcarriers in the frequency domain. The first subcarrier of the PUSCH bandwidth may be a first subcarrier of a first Resource Block (RB) of the PUSCH; and the last subcarrier of the PUSCH bandwidth may be a last subcarrier of a last RB of the PUSCH. One subcarrier of one symbol may also be referred to as one resource element (RE). A modulated symbol may also be understood as one RE, and the three terms may be equivalent.

In the first mapping pattern, "the mapping start position of the plurality of UCI modulated symbols" may indicate a position at which the plurality of UCI modulated symbols start to be mapped on time-frequency resources occupied by the PUSCH. The plurality of UCI modulated symbols may be continuously mapped to a plurality of REs starting from the mapping start position (such a mapping pattern may be referred to as centralized mapping); alternatively, the plurality of UCI modulated symbols may be divided into a plurality of groups, each group includes one or more UCI modulated symbols, each group has a respective mapping start position, and UCI modulated symbols of each group are mapped starting from the respective mapping start position (such a mapping pattern may be referred to as distributed mapping).

In some implementations, the mapping manner of the plurality of UCI modulated symbols may include one or more of the following:
(1) The plurality of UCI modulated symbols are first mapped to all or part of REs corresponding to a start symbol, and then mapped to REs corresponding to symbol(s) before or after the start symbol; where the start symbol includes a symbol corresponding to the mapping start position. Such a manner may be referred to as a manner of frequency-domain mapping first and then time-domain mapping. The manner of frequency-domain mapping first and then time-domain mapping can reduce delay of UCI mapping and detection.
(2) The plurality of UCI modulated symbols are first mapped to all or part of REs corresponding to a start subcarrier, and then mapped to REs corresponding to subcarrier(s) before or after the start subcarrier; where the start subcarrier includes a subcarrier corresponding to the mapping start position. Such a manner may be referred to as a manner of time-domain mapping first and then frequency-domain mapping. The manner of time-domain mapping first and then frequency-domain mapping can improve reliability of UCI transmission, improve performance of UCI detection, and increase coverage of UCI transmission.

The foregoing two mapping manners are applicable to both the centralized mapping and the distributed mapping. For example, when centralized mapping is used, the manner of frequency-domain mapping first and then time-domain mapping or the manner of time-domain mapping first and then frequency-domain mapping may be used. For another example, when distributed mapping is used, UCI modulated symbols of each group may adopt the manner of frequency-domain mapping first and then time-domain mapping or the manner of time-domain mapping first and then frequency-domain mapping; the mapping manner used by each group may be the same or different. For example, if the plurality of UCI modulated symbols are divided into 2 groups, both groups may adopt the manner of frequency-domain mapping first and then time-domain mapping, or both groups may adopt the manner of time-domain mapping first and then frequency-domain mapping; alternatively, one of the 2 groups may adopt the manner of frequency-domain mapping first and then time-domain mapping, and the other group may adopt the manner of time-domain mapping first and then frequency-domain mapping.

An implementation of the first mapping pattern is described below by using Embodiment One.

### Embodiment One

This embodiment describes a centralized mapping pattern.

In the centralized mapping pattern, a plurality of UCI modulated symbols are mapped in a specific mapping manner starting from a mapping start position. The first mapping pattern may include one or more of the following content:
(1) a mapping start position of the plurality of UCI modulated symbols;
(2) a mapping manner of the plurality of UCI modulated symbols (for example, including the manner of frequency-domain mapping first and then time-domain mapping, or the manner of time-domain mapping first and then frequency-domain mapping).

FIG. 3A is a schematic diagram of a first mapping pattern according to Embodiment One. In FIG. 3A, description is made by using an example in which UCI modulated symbols include HARQ modulated symbols and CSI modulated symbols, and the HARQ modulated symbols and the CSI modulated symbols use the same first mapping pattern.

The first mapping pattern includes:
(1) The mapping start position of the plurality of UCI modulated symbols is the RE corresponding to the first symbol of the PUSCH in the time domain and the first subcarrier of the PUSCH bandwidth.
(2) The mapping manner of the plurality of UCI modulated symbols is as follows: the plurality of UCI modulated symbols are first mapped to all or part of REs corresponding to a start symbol, and then mapped to REs corresponding to symbols subsequent to the start symbol, where the start symbol includes the symbol corresponding to the mapping start position. This mapping manner may be referred to as a frequency-domain-first then time-domain mapping manner.

In the example of FIG. 3A, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3A is merely an example. HARQ modulated symbol(s) and CSI modulated symbol(s) included in the UCI modulated symbols adopt the same mapping start position and mapping manner, where the mapping start position is the RE corresponding to symbol 1 and subcarrier 1; the mapping manner is to first map to all REs corresponding to the start symbol (i.e., symbol 1), then map to REs corresponding to a symbol (i.e., symbol 2) subsequent to the start symbol (i.e., symbol 1), and so on, until all UCI modulated symbols are mapped to REs of the PUSCH.

During mapping, mapping is performed in an order of first mapping HARQ modulated symbol(s) and then mapping CSI modulated symbol(s). Since the HARQ modulated symbol(s) and the CSI modulated symbol(s) adopt the same first mapping pattern, when mapping a CSI modulated symbol, if an RE determined according to the first mapping pattern is occupied by an HARQ modulated symbol, a next RE is determined until an unoccupied RE (referred to as a idle RE for brevity) is found, and the CSI modulated symbol is mapped to the idle RE. Taking FIG. 3A as an example, the example includes 4 HARQ modulated symbols. First, the 4 HARQ modulated symbols are mapped to 4 REs starting from the mapping start position according to the first mapping pattern. When mapping the CSI modulated symbols, the first 4 REs determined according to the first mapping pattern are all occupied by the HARQ modulated symbols, so the CSI modulated symbols are mapped to REs starting from the RE corresponding to symbol 1 and subcarrier 5.

The manner of frequency-domain mapping first and then time-domain mapping can reduce the delay of mapping and detection of HARQ and/or CSI.

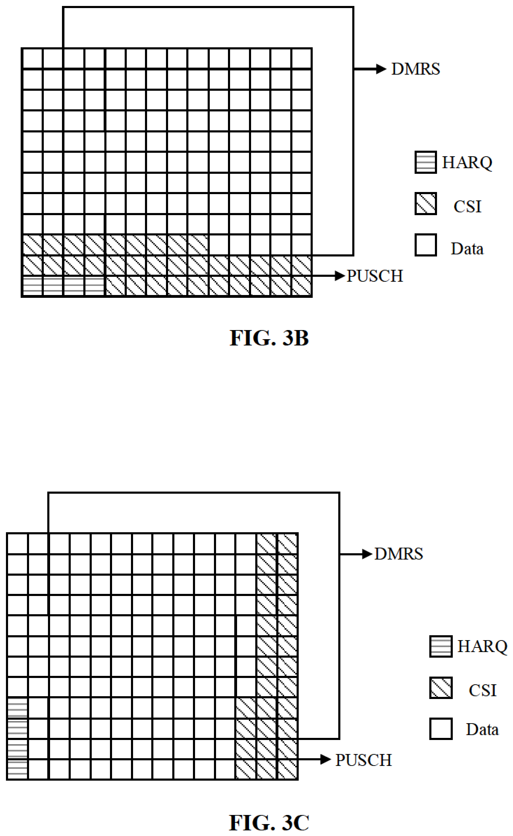

FIG. 3B is a schematic diagram of another first mapping pattern according to Embodiment One. In FIG. 3B, description is made by using an example in which UCI modulated symbols include HARQ modulated symbol(s) and CSI modulated symbol(s), and the HARQ modulated symbol(s) and the CSI modulated symbol(s) adopt the same first mapping pattern.

The first mapping pattern includes:
(1) The mapping start position of the plurality of UCI modulated symbols is the RE corresponding to the first symbol of the PUSCH in the time domain and the first subcarrier of the PUSCH bandwidth.
(2) The mapping manner of the plurality of UCI modulated symbols is as follows: the plurality of UCI modulated symbols are first mapped to all or part of REs corresponding to a start subcarrier, and then mapped to REs corresponding to subcarrier(s) before or after the start subcarrier, where the start subcarrier includes the subcarrier corresponding to the mapping start position. This mapping manner may be referred to as a manner of time-domain mapping first and then frequency-domain mapping.

In the example of FIG. 3B, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3B is merely an example. HARQ modulated symbol(s) and CSI modulated symbol(s) included in the UCI modulated symbols adopt the same mapping start position and mapping manner, where the mapping start position is the RE corresponding to symbol 1 and subcarrier 1; the mapping manner is to first map to all REs corresponding to the start subcarrier (i.e., subcarrier 1), then map to REs corresponding to a subcarrier (i.e., subcarrier 2)subsequent to the start subcarrier (i.e., subcarrier 1), and so on, until all UCI modulated symbols are mapped to REs of the PUSCH.

During mapping, mapping is performed in an order of first mapping HARQ modulated symbol(s) and then mapping CSI modulated symbol(s). Since the HARQ modulated symbol(s) and the CSI modulated symbol(s) adopt the same first mapping pattern, when mapping a CSI modulated symbol, if an RE determined according to the first mapping pattern is occupied by an HARQ modulated symbol, a next RE is determined until a idle RE is found, and the CSI modulated symbol is mapped to the idle RE. Taking FIG. 3B as an example, the example includes 4 HARQ modulated symbols. First, the 4 HARQ modulated symbols are mapped to 4 REs starting from the mapping start position according to the first mapping pattern. When mapping the CSI modulated symbols, the first 4 REs determined according to the first mapping pattern are all occupied by the HARQ modulated symbols, so the CSI modulated symbols are mapped to REs starting from the RE corresponding to symbol 5 and subcarrier 1.

The manner of time-domain mapping first and then frequency-domain mapping can improve the reliability of UCI transmission, enhance the performance of UCI detection, and enlarge the coverage of UCI transmission.

FIG. 3C is a schematic diagram of another first mapping pattern according to Embodiment One. In FIG. 3C, description is made by using an example in which UCI modulated symbols include HARQ modulated symbols and CSI modulated symbols, and the HARQ modulated symbols and the CSI modulated symbols adopt different first mapping patterns.

The first mapping pattern includes a mapping pattern for HARQ modulated symbols and a mapping pattern for CSI modulated symbols.

The mapping pattern for HARQ modulated symbols includes:
(1) The mapping start position of the plurality of HARQ modulated symbols is the RE corresponding to the first symbol of the PUSCH in the time domain and the first subcarrier of the PUSCH bandwidth.
(2) The mapping manner of the plurality of HARQ modulated symbols is as follows: the plurality of HARQ modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as a manner of frequency-domain mapping first and then time-domain mapping.

The mapping pattern for CSI modulated symbols includes:
(1) The mapping start position of the plurality of CSI modulated symbols is the RE corresponding to the last symbol of the PUSCH in the time domain and the first subcarrier of the PUSCH bandwidth.
(2) The mapping manner of the plurality of CSI modulated symbols is as follows: the plurality of CSI modulated symbols are first mapped to all or part of REs corresponding to a start symbol, and then mapped to REs corresponding to symbol(s) preceding the start symbol, where the start symbol includes the symbol corresponding to the mapping start position. This mapping manner may be referred to as a manner of frequency-domain mapping first and then time-domain mapping.

In the example of FIG. 3C, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3C is merely an example. HARQ modulated symbols and CSI modulated symbols included in the UCI modulated symbols adopt different mapping start positions and the same mapping manner. The mapping start position of the HARQ modulated symbols is the RE corresponding to symbol 1 and subcarrier 1; the mapping manner is to first map to all REs corresponding to the start symbol (i.e., symbol 1), then map to symbol(s) subsequent to the start symbol (i.e., symbol 1). Since there are only 4 HARQ modulated symbols in the example of FIG. 3C, which is less than the number of REs corresponding to the start symbol (i.e., symbol 1), the HARQ modulated symbols are only mapped to part of the REs corresponding to the start symbol (i.e., symbol 1). The mapping start position of the CSI modulated symbols is the RE corresponding to symbol 14 and subcarrier 1; the mapping manner is to first map to all REs corresponding to the start symbol (i.e., symbol 14), then map to REs corresponding to a symbol (i.e., symbol 13) preceding the start symbol (i.e., symbol 14), and so on, until all CSI modulated symbols are mapped to REs of the PUSCH.

During mapping, mapping is performed in an order of first mapping HARQ modulated symbols and then mapping CSI modulated symbols.

The manner of frequency-domain mapping first and then time-domain mapping can reduce the delay of mapping and detection of HARQ and/or CSI.

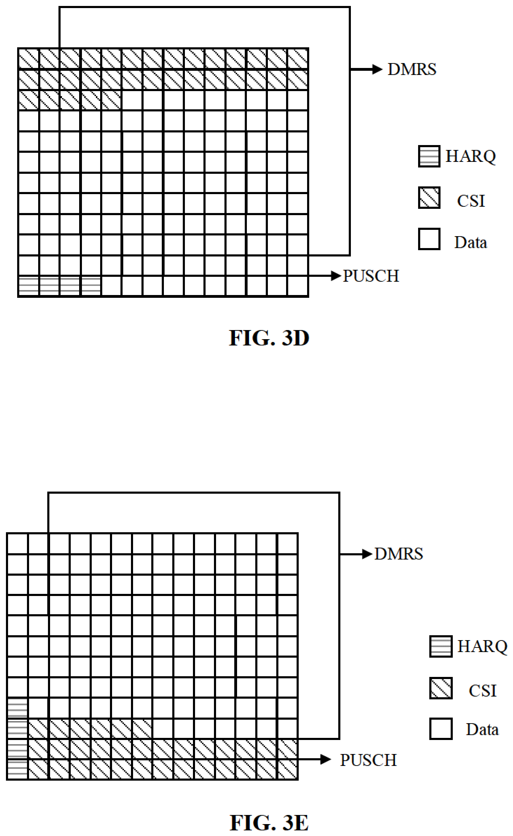

FIG. 3D is a schematic diagram of another first mapping pattern according to Embodiment One. In FIG. 3D, description is made by using an example in which UCI modulated symbols include HARQ modulated symbols and CSI modulated symbols, and the HARQ modulated symbols and the CSI modulated symbols adopt different first mapping patterns.

The first mapping pattern includes a mapping pattern for HARQ modulated symbols and a mapping pattern for CSI modulated symbols.

The mapping pattern for HARQ modulated symbols includes:
(1) The mapping start position of the plurality of HARQ modulated symbols is the RE corresponding to the first symbol of the PUSCH in the time domain and the first subcarrier of the PUSCH bandwidth.
(2) The mapping manner of the plurality of HARQ modulated symbols is as follows: the plurality of HARQ modulated symbols are first mapped to all or part of REs corresponding to a start subcarrier, and then mapped to REs corresponding to subcarrier(s) subsequent to the start subcarrier, where the start subcarrier includes the subcarrier corresponding to the mapping start position. This mapping manner may be referred to as the manner of time-domain mapping first and then frequency-domain mapping.

The mapping pattern for CSI modulated symbols includes:
(1) The mapping start position of the plurality of CSI modulated symbols is the RE corresponding to the first symbol of the PUSCH in the time domain and the last subcarrier of the PUSCH bandwidth.
(2) The mapping manner of the plurality of CSI modulated symbols is as follows: the plurality of CSI modulated symbols are first mapped to all or part of REs corresponding to a start subcarrier, and then mapped to REs corresponding to subcarrier(s) preceding the start subcarrier, where the start subcarrier includes the subcarrier corresponding to the mapping start position. This mapping manner may be referred to as the manner of time-domain mapping first and then frequency-domain mapping.

In the example of FIG. 3D, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3D is merely an example. HARQ modulated symbols and CSI modulated symbols included in the UCI modulated symbols adopt different mapping start positions and the same mapping manner. The mapping start position of the HARQ modulated symbols is the RE corresponding to symbol 1 and subcarrier 1; the mapping manner is to first map to all REs corresponding to the start subcarrier (i.e., subcarrier 1), then map to subcarrier(s) subsequent to the start subcarrier (i.e., subcarrier 1). Since there are only 4 HARQ modulated symbols in the example of FIG. 3D, which is less than the number of REs corresponding to the start subcarrier (i.e., subcarrier 1), the HARQ modulated symbols are only mapped to part of the REs corresponding to the start subcarrier (i.e., subcarrier 1). The mapping start position of the CSI modulated symbols is the RE corresponding to symbol 1 and subcarrier 12; the mapping manner is to first map to all REs corresponding to the start subcarrier (i.e., subcarrier 12), then map to REs corresponding to a subcarrier (i.e., subcarrier 11) preceding the start subcarrier (i.e., subcarrier 12), and so on, until all CSI modulated symbols are mapped to REs of the PUSCH.

During mapping, mapping is performed in an order of first mapping HARQ modulated symbols and then mapping CSI modulated symbols.

The manner of time-domain mapping first and then frequency-domain mapping can improve the reliability of UCI transmission, enhance the performance of UCI detection, and enlarge the coverage of UCI transmission.

FIG. 3E is a schematic diagram of another first mapping pattern according to Embodiment One. In FIG. 3E, description is made by using an example in which UCI modulated symbols include HARQ modulated symbols and CSI modulated symbols, and the HARQ modulated symbols and the CSI modulated symbols adopt different first mapping patterns.

The first mapping pattern includes a mapping pattern for HARQ modulated symbols and a mapping pattern for CSI modulated symbols.

The mapping pattern for HARQ modulated symbols includes:
(1) The mapping start position of the plurality of HARQ modulated symbols is the RE corresponding to the first symbol of the PUSCH in the time domain and the first subcarrier of the PUSCH bandwidth.
(2) The mapping manner of the plurality of HARQ modulated symbols is as follows: the plurality of HARQ modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as the manner of frequency-domain mapping first and then time-domain mapping.

The mapping pattern for CSI modulated symbols includes:
(1) The mapping start position of the plurality of CSI modulated symbols is the RE corresponding to the first symbol of the PUSCH in the time domain and the first subcarrier of the PUSCH bandwidth.
(2) The mapping manner of the plurality of CSI modulated symbols is as follows: the plurality of CSI modulated symbols are first mapped to all or part of REs corresponding to a start subcarrier, and then mapped to REs corresponding to subcarrier(s) subsequent to the start subcarrier, where the start subcarrier includes the subcarrier corresponding to the mapping start position. This mapping manner may be referred to as the manner of time-domain mapping first and then frequency-domain mapping.

In the example of FIG. 3E, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3E is merely an example. HARQ modulated symbols and CSI modulated symbols included in the UCI modulated symbols adopt the same mapping start position and different mapping manners. The mapping start position of both the HARQ modulated symbols and the CSI modulated symbols is the RE corresponding to symbol 1 and subcarrier 1. The mapping manner of the HARQ modulated symbols is to first map to all REs corresponding to the start symbol (i.e., symbol 1), then map to REs corresponding to a symbol (i.e., symbol 2) subsequent to the start symbol (i.e., symbol 1), and so on, until all HARQ modulated symbols are mapped to REs of the PUSCH. The mapping manner of the CSI modulated symbols is to first map to all REs corresponding to the start subcarrier (i.e., subcarrier 1), then map to REs corresponding to a subcarrier (i.e., subcarrier 2) subsequent to the start subcarrier (i.e., subcarrier 1), and so on, until all CSI modulated symbols are mapped to REs of the PUSCH.

During mapping, mapping is performed in an order of first mapping HARQ modulated symbols and then mapping CSI modulated symbols. Since the HARQ modulated symbols and the CSI modulated symbols adopt the same mapping start position, when mapping a CSI modulated symbol, if an RE determined according to the first mapping pattern is occupied by an HARQ modulated symbol, a next RE is determined until a idle RE is found, and the CSI modulated symbol is mapped to the idle RE. Taking FIG. 3E as an example, the example includes 4 HARQ modulated symbols. First, the 4 HARQ modulated symbols are mapped respectively to the RE corresponding to symbol 1 and subcarrier 1, the RE corresponding to symbol 1 and subcarrier 2, the RE corresponding to symbol 1 and subcarrier 3, and the RE corresponding to symbol 1 and subcarrier 4 according to the first mapping pattern. Then, the CSI modulated symbols are mapped according to the first mapping pattern. During mapping of the CSI modulated symbols, if an RE determined according to the first mapping pattern is occupied by an HARQ modulated symbol, a next idle RE is determined until all CSI modulated symbols are mapped to REs of the PUSCH.

In this example, the HARQ modulated symbols adopt the manner of frequency-domain mapping first and then time-domain mapping, and the CSI modulated symbols adopt the manner of time-domain mapping first and then frequency-domain mapping, which are different. This implementation can increase the flexibility of UCI mapping onto the PUSCH, and the mapping manner of HARQ modulated symbols and CSI modulated symbols can be flexibly determined according to different application scenarios.

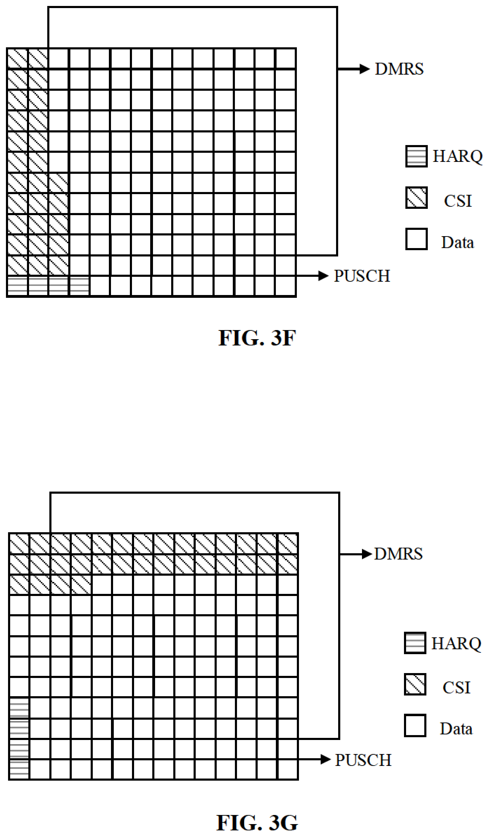

FIG. 3F is a schematic diagram of another first mapping pattern according to Embodiment One. In FIG. 3F, description is made by using an example in which UCI modulated symbols include HARQ modulated symbols and CSI modulated symbols, and the HARQ modulated symbols and the CSI modulated symbols adopt different first mapping patterns.

The first mapping pattern includes a mapping pattern for HARQ modulated symbols and a mapping pattern for CSI modulated symbols.

The mapping pattern for HARQ modulated symbols includes:
(1) The mapping start position of the plurality of HARQ modulated symbols is the RE corresponding to the first symbol of the PUSCH in the time domain and the first subcarrier of the PUSCH bandwidth.
(2) The mapping manner of the plurality of HARQ modulated symbols is as follows: the plurality of HARQ modulated symbols are first mapped to all or part of REs corresponding to a start subcarrier, and then mapped to REs corresponding to subcarrier(s) subsequent to the start subcarrier, where the start subcarrier includes the subcarrier corresponding to the mapping start position. This mapping manner may be referred to as the manner of time-domain mapping first and then frequency-domain mapping.

The mapping pattern for CSI modulated symbols includes:
(1) The mapping start position of the plurality of CSI modulated symbols is the RE corresponding to the first symbol of the PUSCH in the time domain and the first subcarrier of the PUSCH bandwidth.
(2) The mapping manner of the plurality of CSI modulated symbols is as follows: the plurality of CSI modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as the manner of time-domain mapping first and then frequency-domain mapping.

In the example of FIG. 3F, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3F is merely an example. HARQ modulated symbols and CSI modulated symbols included in the UCI modulated symbols adopt the same mapping start position and different mapping manners. The mapping start position of both the HARQ modulated symbols and the CSI modulated symbols is the RE corresponding to symbol 1 and subcarrier 1. The mapping manner of the HARQ modulated symbols is to first map to all REs corresponding to the start subcarrier (i.e., subcarrier 1), then map to REs corresponding to a subcarrier (i.e., subcarrier 2) subsequent to the start subcarrier (i.e., subcarrier 1), and so on, until all HARQ modulated symbols are mapped to REs of the PUSCH. The mapping manner of the CSI modulated symbols is to first map to all REs corresponding to the start symbol (i.e., symbol 1), then map to REs corresponding to a symbol (i.e., symbol 2) subsequent to the start symbol (i.e., symbol 1), and so on, until all CSI modulated symbols are mapped to REs of the PUSCH.

During mapping, mapping is performed in an order of first mapping HARQ modulated symbols and then mapping CSI modulated symbols. Since the HARQ modulated symbols and the CSI modulated symbols adopt the same mapping start position, when mapping a CSI modulated symbol, if an RE determined according to the first mapping pattern is occupied by an HARQ modulated symbol, a next RE is determined until a idle RE is found, and the CSI modulated symbol is mapped to the idle RE. Taking FIG. 3F as an example, the example includes 4 HARQ modulated symbols. First, the 4 HARQ modulated symbols are mapped respectively to the RE corresponding to symbol 1 and subcarrier 1, the RE corresponding to symbol 2 and subcarrier 1, the RE corresponding to symbol 3 and subcarrier 1, and the RE corresponding to symbol 4 and subcarrier 1 according to the first mapping pattern. Then, the CSI modulated symbols are mapped according to the first mapping pattern. During mapping of the CSI modulated symbols, if an RE determined according to the first mapping pattern is occupied by an HARQ modulated symbol, a next idle RE is determined until all CSI modulated symbols are mapped to REs of the PUSCH.

In this example, the HARQ modulated symbols adopt the manner of time-domain mapping first and then frequency-domain mapping, and the CSI modulated symbols adopt the manner of frequency-domain mapping first and then time-domain mapping, which are different. This implementation can increase the flexibility of UCI mapping onto the PUSCH, and mapping manner of HARQ modulated symbols and CSI modulated symbols can be flexibly determined according to different application scenarios.

FIG. 3G is a schematic diagram of another first mapping pattern according to Embodiment One. In FIG. 3G, description is made by using an example in which UCI modulated symbols include HARQ modulated symbols and CSI modulated symbols, and the HARQ modulated symbols and the CSI modulated symbols adopt different first mapping patterns.

The first mapping pattern includes a mapping pattern for HARQ modulated symbols and a mapping pattern for CSI modulated symbols.

The mapping pattern for HARQ modulated symbols includes:
(1) The mapping start position of the plurality of HARQ modulated symbols is the RE corresponding to the first symbol of the PUSCH in the time domain and the first subcarrier of the PUSCH bandwidth.
(2) The mapping manner of the plurality of HARQ modulated symbols is as follows: the plurality of HARQ modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as the manner of frequency-domain mapping first and then time-domain mapping.

The mapping pattern for CSI modulated symbols includes:
(1) The mapping start position of the plurality of CSI modulated symbols is the RE corresponding to the first symbol of the PUSCH in the time domain and the last subcarrier of the PUSCH bandwidth.
(2) The mapping manner of the plurality of CSI modulated symbols is as follows: the plurality of CSI modulated symbols are first mapped to all or part of REs corresponding to a start subcarrier, and then mapped to REs corresponding to subcarrier(s) preceding the start subcarrier, where the start subcarrier includes the subcarrier corresponding to the mapping start position. This mapping manner may be referred to as the manner of time-domain mapping first and then frequency-domain mapping.

In the example of FIG. 3G, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 3G is merely an example. HARQ modulated symbols and CSI modulated symbols included in the UCI modulated symbols adopt different mapping start positions and different mapping manners. The mapping start position of the HARQ modulated symbols is the RE corresponding to symbol 1 and subcarrier 1; the mapping manner is to first map to all REs corresponding to the start symbol (i.e., symbol 1), then map to REs corresponding to a symbol (i.e., symbol 2) subsequent to the start symbol (i.e., symbol 1), and so on, until all HARQ modulated symbols are mapped to REs of the PUSCH. The mapping start position of the CSI modulated symbols is the RE corresponding to symbol 1 and subcarrier 12; the mapping manner is to first map to all REs corresponding to the start subcarrier (i.e., subcarrier 12), then map to REs corresponding to a subcarrier (i.e., subcarrier 11) preceding the start subcarrier (i.e., subcarrier 12), and so on, until all CSI modulated symbols are mapped to REs of the PUSCH.

In this example, the HARQ modulated symbols adopt the manner of frequency-domain mapping first and then time-domain mapping, and the CSI modulated symbols adopt the manner of time-domain mapping first and then frequency-domain mapping, which are different. This implementation can increase the flexibility of UCI mapping onto the PUSCH, and mapping manner of HARQ modulated symbols and CSI modulated symbols can be flexibly determined according to different application scenarios.

The examples shown in FIGS. 3A to 3G describe various centralized mapping patterns. In the above examples, both HARQ modulated symbols and CSI modulated symbols adopt a centralized mapping pattern, and the content of the mapping patterns may be the same or different. For example, HARQ modulated symbols and CSI modulated symbols may adopt the same mapping start position and mapping manner (including the manner of frequency-domain mapping first and then time-domain mapping or the manner of time-domain mapping first and then frequency-domain mapping), or the same mapping start position and different mapping manners, or different mapping start positions and the same mapping manner, or different mapping start positions and different mapping manners. The mapping start positions in the examples shown in FIGS. 3A to 3G are merely examples, and other mapping start positions may also be adopted in the embodiments of the present disclosure, which will not be listed one by one.

In this embodiment, when the number of information bits of HARQ is less than or equal to 2 bits, the HARQ modulated symbols may be mapped to the PUSCH in a puncturing manner; when the number of information bits of HARQ is greater than 2 bits, the HARQ modulated symbols may be mapped to the PUSCH in a rate matching manner.

An implementation of the first mapping pattern is described below by using Embodiment Two.

### Embodiment Two:

This embodiment describes a distributed mapping pattern.

In the distributed mapping pattern, a plurality of UCI modulated symbols may be divided into a plurality of groups, each group including one or more UCI modulated symbols.

The first mapping pattern may include at least one of the following:
(1) Grouping situation of the plurality of UCI modulated symbols, for example, the number of groups into which the plurality of UCI modulated symbols are divided, and the number of UCI modulated symbols included in each group.
(2) Mapping situation of each group of the plurality of UCI modulated symbols, for example, the mapping situation includes at least one of a mapping start position or a mapping range of each group of the plurality of UCI modulated symbols, where the mapping range may include a range in the time domain, for example, the number of symbols occupied.

When the UCI modulated symbols are divided into 2 groups, the numbers of UCI modulated symbols included in each group may be floor(m/2) and ceil(m/2) respectively, where m is the total number of UCI modulated symbols, floor( ) represents rounding down, and ceil(m/2) represents rounding up.

In some examples, HARQ modulated symbols and CSI modulated symbols may be divided separately, that is, a plurality of HARQ modulated symbols are divided into 2 or more groups, and a plurality of CSI modulated symbols are divided into 2 or more groups. For example, the UCI modulated symbols include x HARQ modulated symbols and y CSI modulated symbols. According to the first mapping pattern, the x HARQ modulated symbols are divided into 2 groups, where the numbers of HARQ modulated symbols included in the respective groups are floor(x/2) and ceil(x/2) respectively; according to the first mapping pattern, the y CSI modulated symbols are divided into 2 groups, where the numbers of CSI modulated symbols included in the respective groups are floor(y/2) and ceil(y/2) respectively.

HARQ modulated symbols and CSI modulated symbols may adopt different mapping patterns, for example, the HARQ modulated symbols adopt a distributed mapping pattern and the CSI modulated symbols adopt a centralized mapping pattern (as shown in Embodiment One); or the HARQ modulated symbols adopt a centralized mapping pattern (as shown in Embodiment One) and the CSI modulated symbols adopt a distributed mapping pattern; or both the HARQ modulated symbols and the CSI modulated symbols adopt a distributed mapping pattern; or both the HARQ modulated symbols and the CSI modulated symbols adopt a centralized mapping pattern.

In some implementations, in a case where the plurality of UCI modulated symbols are divided into 2 groups including a first group and a second group, the mapping situation of each group of the plurality of UCI modulated symbols includes:
the mapping start position of the first group is the RE corresponding to the first symbol of the PUSCH in the time domain and the first subcarrier of the PUSCH bandwidth; and
[0182]the mapping start position of the second group is the RE corresponding to the first symbol of the PUSCH in the time domain and the last subcarrier of the PUSCH bandwidth.

The first mapping pattern may further include a mapping range of the first group and a mapping range of the second group, for example, the mapping range of the first group includes d1 symbols, and the mapping range of the second group includes d2 symbols, where d1 and d2 are positive integers.

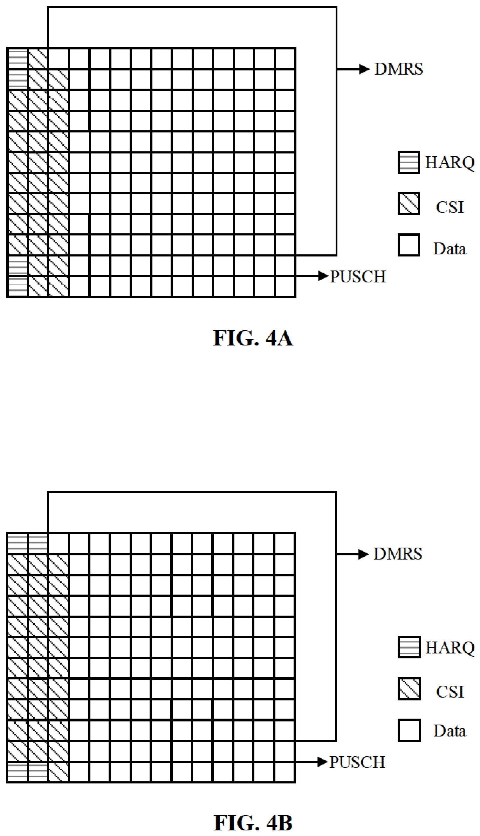

FIGS. 4A and 4B are schematic diagrams of two first mapping patterns according to Embodiment Two. In FIGS. 4A and 4B, description is made by using an example in which UCI modulated symbols include HARQ modulated symbols and CSI modulated symbols, the HARQ modulated symbols adopt distributed mapping, and the CSI modulated symbols adopt centralized mapping.

In the example of FIG. 4A, the first mapping pattern includes:
(1) The HARQ modulated symbols are divided into 2 groups, where the numbers of HARQ modulated symbols in the 2 groups are floor(x/2) and ceil(x/2) respectively, x being the total number of HARQ modulated symbols. The mapping start position of the first group is the RE corresponding to the first symbol of the PUSCH in the time domain and the first subcarrier of the PUSCH bandwidth, and the mapping start position of the second group is the RE corresponding to the first symbol of the PUSCH in the time domain and the last subcarrier of the PUSCH bandwidth. The mapping range of the first group includes 1 symbol, and the mapping range of the second group also includes 1 symbol, that is, d1 = d2 = 1.
(2) The CSI modulated symbols adopt centralized mapping, and the mapping start position of the plurality of CSI modulated symbols is the RE corresponding to the first symbol of the PUSCH in the time domain and the first subcarrier of the PUSCH bandwidth.
(3) The mapping manner of the plurality of CSI modulated symbols is as follows: the plurality of CSI modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as the manner of frequency-domain mapping first and then time-domain mapping.

In the example of FIG. 4A, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 4A is merely an example. Four HARQ modulated symbols are divided into 2 groups, each group including 2 HARQ modulated symbols. The mapping start position of the first group is the RE corresponding to symbol 1 and subcarrier 1, and the mapping range includes 1 symbol, so the 2 HARQ modulated symbols in the first group are mapped respectively to the RE corresponding to symbol 1 and subcarrier 1 and the RE corresponding to symbol 1 and subcarrier 2. The mapping start position of the second group is the RE corresponding to symbol 1 and subcarrier 12, and the mapping range includes 1 symbol, so the 2 HARQ modulated symbols in the second group are mapped respectively to the RE corresponding to symbol 1 and subcarrier 12 and the RE corresponding to symbol 1 and subcarrier 11.

During mapping, mapping is performed in an order of first mapping HARQ modulated symbols and then mapping CSI modulated symbols. When mapping a CSI modulated symbol, if an RE determined according to the first mapping pattern is occupied by an HARQ modulated symbol, a next RE is determined until a idle RE is found, and the CSI modulated symbol is mapped to the idle RE. Taking FIG. 4A as an example, the RE corresponding to symbol 1 and subcarrier 1 and the RE corresponding to symbol 1 and subcarrier 2 are occupied by HARQ modulated symbols, so the CSI modulated symbols are mapped to REs starting from the RE corresponding to symbol 1 and subcarrier 3, in the manner of frequency-domain mapping first and then time-domain mapping, until all CSI modulated symbols are mapped to REs of the PUSCH.

In this example, the HARQ modulated symbols are distributed at both ends of the PUSCH bandwidth, which can achieve a greater frequency-domain diversity gain; the HARQ modulated symbols are mapped to only 1 symbol, which can ensure the frequency-domain diversity gain.

In the example of FIG. 4B, the first mapping pattern includes:
(1) The HARQ modulated symbols are divided into 2 groups, where the numbers of HARQ modulated symbols in the 2 groups are floor(x/2) and ceil(x/2) respectively, x being the total number of HARQ modulated symbols. The mapping start position of the first group is the RE corresponding to the first symbol of the PUSCH in the time domain and the first subcarrier of the PUSCH bandwidth, and the mapping start position of the second group is the RE corresponding to the first symbol of the PUSCH in the time domain and the last subcarrier of the PUSCH bandwidth. The mapping range of the first group includes a plurality of symbols, and the mapping range of the second group also includes a plurality of symbols, that is, d1 > 1 and d2 > 1.
(2) The CSI modulated symbols adopt centralized mapping, and the mapping start position of the plurality of CSI modulated symbols is the RE corresponding to the first symbol of the PUSCH in the time domain and the first subcarrier of the PUSCH bandwidth.
(3) The mapping manner of the plurality of CSI modulated symbols is as follows: the plurality of CSI modulated symbols are first mapped to all or part of REs corresponding to a start symbol, and then mapped to REs corresponding to symbol(s) subsequent to the start symbol, where the start symbol includes the symbol corresponding to the mapping start position. This mapping manner may be referred to as the manner of frequency-domain mapping first and then time-domain mapping.

In the example of FIG. 4B, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 4B is merely an example. Four HARQ modulated symbols are divided into 2 groups, each group including 2 HARQ modulated symbols. The mapping start position of the first group is the RE corresponding to symbol 1 and subcarrier 1, and the mapping range includes 2 symbols, so the 2 HARQ modulated symbols in the first group are mapped respectively to the RE corresponding to symbol 1 and subcarrier 1 and the RE corresponding to symbol 2 and subcarrier 1. The mapping start position of the second group is the RE corresponding to symbol 1 and subcarrier 12, and the mapping range includes 2 symbols, so the 2 HARQ modulated symbols in the second group are mapped respectively to the RE corresponding to symbol 1 and subcarrier 12 and the RE corresponding to symbol 2 and subcarrier 12. In this example, the HARQ modulated symbols are dispersedly mapped in the frequency domain, and the HARQ modulated symbols in each group are mapped to consecutive symbols in the time domain.

During mapping, mapping is performed in an order of first mapping HARQ modulated symbols and then mapping CSI modulated symbols. When mapping a CSI modulated symbol, if an RE determined according to the first mapping pattern is occupied by an HARQ modulated symbol, a next RE is determined until a idle RE is found, and the CSI modulated symbol is mapped to the idle RE. Taking FIG. 4B as an example, the RE corresponding to symbol 1 and subcarrier 1 is occupied by an HARQ modulated symbol, so the CSI modulated symbols are mapped to REs starting from the RE corresponding to symbol 1 and subcarrier 2, in the manner of frequency-domain mapping first and then time-domain mapping, until all CSI modulated symbols are mapped to REs of the PUSCH.

In this example, the HARQ modulated symbols are distributed at both ends of the PUSCH bandwidth, which can achieve a greater frequency-domain diversity gain; the HARQ modulated symbols of each group are mapped to more than 1 symbol, which can improve the reliability of HARQ transmission, enhance the performance of HARQ detection, and enlarge the coverage of HARQ transmission.

In some examples, when the plurality of UCI modulated symbols are divided into 2 groups, where the mapping range of the first group includes d1 symbols and the mapping range of the second group includes d2 symbols, the d1 symbols and the d2 symbols do not overlap; that is, the UCI modulated symbols of the first group and the UCI modulated symbols of the second group are mapped to different time-domain resources.

In one example, in a case where a plurality of UCI modulated symbols are divided into two groups, namely a first group and a second group, the mapping situation of each group of the plurality of UCI modulated symbols comprises:
the mapping start position of the first group comprises the RE corresponding to the first symbol of the PUSCH in the time domain and the first subcarrier of the PUSCH bandwidth; and
the mapping start position of the second group comprises the RE corresponding to the (m1+1)-th symbol of the PUSCH in the time domain and the last subcarrier of the PUSCH bandwidth, where m1 is the number of UCI modulated symbols included in the first group.

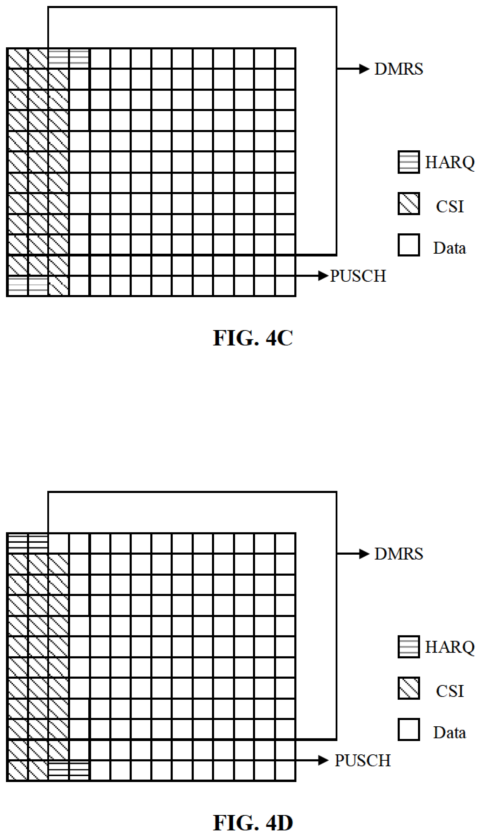

This example is illustrated in FIG. 4C. In FIG. 4C, the UCI modulated symbols include HARQ modulated symbols and CSI modulated symbols, where the HARQ modulated symbols adopt distributed mapping and the CSI modulated symbols adopt centralized mapping. In the example of FIG. 4C, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 4C is merely an example. Four HARQ modulated symbols are divided into two groups, each group including two HARQ modulated symbols. The mapping start position of the first group is the RE corresponding to symbol 1 and subcarrier 1, and the mapping range includes two symbols, so the two HARQ modulated symbols in the first group are mapped to the RE corresponding to symbol 1 and subcarrier 1, and the RE corresponding to symbol 2 and subcarrier 1, respectively. The mapping start position of the second group is the RE corresponding to symbol 3 and subcarrier 12, and the mapping range includes two symbols, so the two HARQ modulated symbols in the second group are mapped to the RE corresponding to symbol 3 and subcarrier 12, and the RE corresponding to symbol 4 and subcarrier 12, respectively. It can be seen that the HARQ modulated symbols in the first group and the HARQ modulated symbols in the second group are mapped to different time-domain resources. After the HARQ modulated symbols are mapped, the CSI modulated symbols are mapped.

In another example, when a plurality of UCI modulated symbols are divided into two groups, namely a first group and a second group, the mapping situation of each group of the plurality of UCI modulated symbols comprises:
the mapping start position of the first group comprises the RE corresponding to the first symbol of the PUSCH in the time domain and the last subcarrier of the PUSCH bandwidth; and
the mapping start position of the second group comprises the RE corresponding to the (m2+1)-th symbol of the PUSCH in the time domain and the first subcarrier of the PUSCH bandwidth, where m2 is the number of UCI modulated symbols included in the first group.

This example is illustrated in FIG. 4D. In FIG. 4D, the UCI modulated symbols include HARQ modulated symbols and CSI modulated symbols, where the HARQ modulated symbols adopt distributed mapping and the CSI modulated symbols adopt centralized mapping. In the example of FIG. 4D, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 4D is merely an example. Four HARQ modulated symbols are divided into two groups, each group including two HARQ modulated symbols. The mapping start position of the first group is the RE corresponding to symbol 1 and subcarrier 12, and the mapping range includes two symbols, so the two HARQ modulated symbols in the first group are mapped to the RE corresponding to symbol 1 and subcarrier 12, and the RE corresponding to symbol 2 and subcarrier 12, respectively. The mapping start position of the second group is the RE corresponding to symbol 3 and subcarrier 1, and the mapping range includes two symbols, so the two HARQ modulated symbols in the second group are mapped to the RE corresponding to symbol 3 and subcarrier 1, and the RE corresponding to symbol 4 and subcarrier 1, respectively. It can be seen that the HARQ modulated symbols in the first group and the HARQ modulated symbols in the second group are mapped to different time-domain resources. After the HARQ modulated symbols are mapped, the CSI modulated symbols are mapped.

In the examples of FIGS. 4C and 4D, the HARQ modulated symbols are divided into two groups distributed at both ends of the PUSCH bandwidth, which can achieve greater frequency-domain diversity gain. The HARQ modulated symbols of each group are mapped to more than one symbol, and the HARQ modulated symbols of different groups are mapped to different time-domain resources, which can improve the reliability of HARQ transmission, enhance HARQ detection performance, and enlarge the coverage of HARQ transmission.

In some examples, in a case where a plurality of UCI modulated symbols are divided into two groups, the mapping range of the first group includes d1 symbols and the mapping range of the second group includes d2 symbols, d1 = d2 = the number of symbols of the PUSCH; that is to say, the UCI modulated symbols of the first group and the UCI modulated symbols of the second group can be mapped to the time-domain range of the PUSCH.

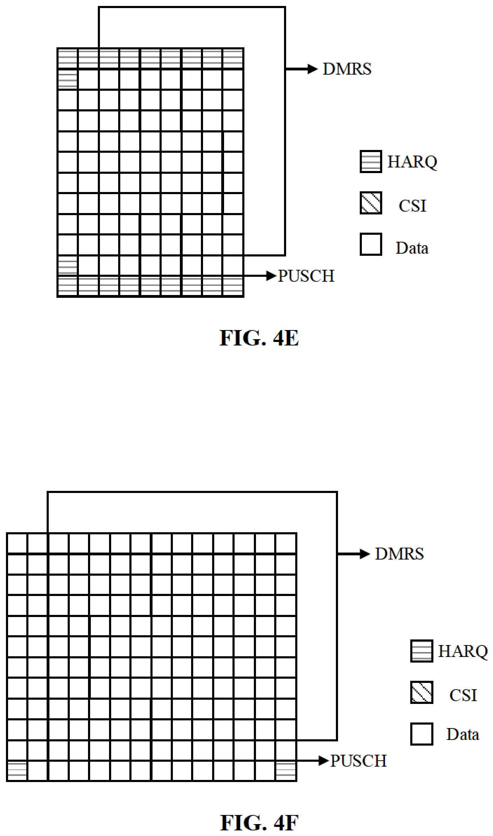

This example is illustrated in FIG. 4E. In FIG. 4E, the HARQ modulated symbols adopt distributed mapping. In the example of FIG. 4E, the transmission bandwidth of the PUSCH is 1 RB (12 subcarriers, denoted as subcarrier 1 to subcarrier 12 in this embodiment), and the time-domain resources occupy 9 symbols (denoted as symbol 1 to symbol 9 in this embodiment). The size of the time-frequency resources of the PUSCH in FIG. 4E is merely an example. Twenty HARQ modulated symbols are divided into two groups, each group including 10 HARQ modulated symbols. The mapping start position of the first group is the RE corresponding to symbol 1 and subcarrier 1, and the HARQ modulated symbols of the first group are mapped continuously in the time domain to all REs corresponding to subcarrier 1 (9 REs in total) and the RE corresponding to symbol 1 and subcarrier 2. The mapping start position of the second group is the RE corresponding to symbol 1 and subcarrier 12, and the HARQ modulated symbols of the second group are mapped continuously in the time domain to all REs corresponding to subcarrier 12 (9 REs in total) and the RE corresponding to symbol 1 and subcarrier 11. Only the mapping manner of HARQ modulated symbols is shown in the example of FIG. 4E. For CSI modulated symbols, distributed mapping or centralized mapping may be adopted, and reference may be made to the foregoing content for specific manners, which will not be repeated here.

In the example of FIG. 4E, the HARQ modulated symbols are divided into two groups distributed at both ends of the PUSCH bandwidth, which can achieve greater frequency-domain diversity gain. The HARQ modulated symbols of each group are mapped to more than one symbol, which can improve the reliability of HARQ transmission, enhance HARQ detection performance, and enlarge the coverage of HARQ transmission.

As shown in FIG. 4F, in some examples, the time-domain start position for mapping HARQ modulated symbols is the first symbol of the PUSCH, the frequency-domain start position is the first subcarrier of the PUSCH bandwidth, and the HARQ modulated symbols adopt distributed mapping. The interval for time-domain mapping of HARQ modulated symbols is one HARQ modulated symbol being mapped for every p symbols, where p may be predefined, determined by a rule, or configured by a network device. For example, p is determined by a rule, and the value of p is related to the number of HARQ modulated symbols and the number of symbols scheduled by the PUSCH. For instance, the symbols for mapping HARQ modulated symbols are the first symbol and the last symbol of the PUSCH. Time-domain distributed mapping can further improve the reliability of HARQ transmission, enhance HARQ detection performance, and enlarge the coverage of HARQ transmission compared with continuous mapping over more than one symbol.

In some examples, the first mapping pattern may divide UCI modulated symbols into a plurality of groups and specify the mapping start position and mapping range of each group.

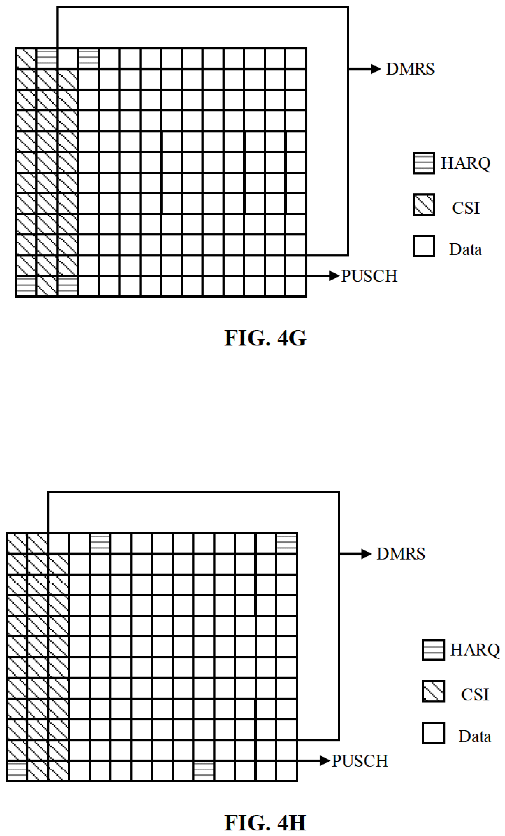

As shown in FIGS. 4G and 4H, four HARQ modulated symbols are divided into four groups, each group containing one HARQ modulated symbol. After the HARQ modulated symbols are mapped, the CSI modulated symbols are mapped. In the examples of FIGS. 4G and 4H, the CSI modulated symbols are mapped using a centralized mapping pattern, the mapping start position the CSI modulated symbols is the RE corresponding to the first symbol of the PUSCH in the time domain and the first subcarrier of the PUSCH bandwidth, and mapping is performed first in the frequency domain and then in the time domain. When mapping a CSI modulated symbol, if the RE determined according to the first mapping pattern is occupied by an HARQ modulated symbol, the next RE is determined until an unoccupied RE (idle RE) is found, and the CSI modulated symbol is mapped to the idle RE.

In some examples, the first mapping pattern comprises: CSI modulated symbols are divided into two groups, the start time-domain position for mapping each group is the first symbol to which no HARQ is mapped, and the CSI modulated symbols in each group are mapped continuously in the time domain. The start frequency-domain positions for mapping the two groups are the first subcarrier and the last subcarrier of the PUSCH bandwidth, respectively. Here, the first subcarrier may also be understood as the subcarrier with the smallest index, and the last subcarrier as the subcarrier with the largest index.

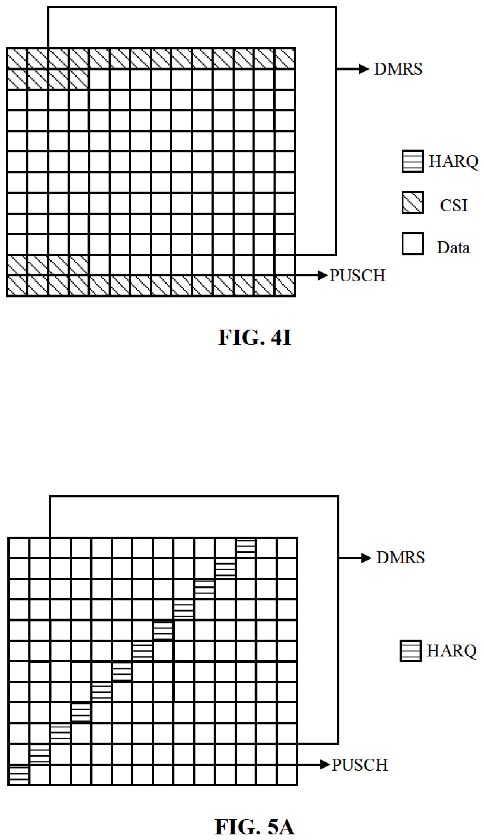

FIG. 4I is a schematic diagram of this example. In the example of FIG. 4I, the transmission bandwidth of the PUSCH is 1 RB (12 subcarriers, denoted as subcarrier 1 to subcarrier 12 in this embodiment), and the time-domain resources occupy 14 symbols (denoted as symbol 1 to symbol 14 in this embodiment). The size of the time-frequency resources of the PUSCH in FIG. 4I is merely an example. 36 CSI modulated symbols are divided into two groups, each group including 18 CSI modulated symbols. The mapping start position of the first group is the RE corresponding to symbol 1 and subcarrier 1, and the mapping range includes 14 symbols (i.e., the number of symbols of the PUSCH), so 14 CSI modulated symbols in the first group are mapped to all REs (14 in total) corresponding to subcarrier 1 and 4 REs corresponding to subcarrier 2, respectively. The mapping start position of the second group is the RE corresponding to symbol 1 and subcarrier 12, and the mapping range includes 14 symbols (i.e., the number of symbols of the PUSCH), so 14 CSI modulated symbols in the second group are mapped to all REs (14 in total) corresponding to subcarrier 12 and 4 REs corresponding to subcarrier 11, respectively. Only the mapping manner of CSI modulated symbols is shown in the example of FIG. 4I. For HARQ modulated symbols, centralized mapping or distributed mapping may be adopted, and reference may be made to the foregoing content for specific mapping manner, which will not be repeated here. In addition, mapping is performed in the order of HARQ modulated symbols first and then CSI modulated symbols. When mapping a CSI modulated symbol, if the RE determined according to the first mapping pattern is occupied by an HARQ modulated symbol, the next RE is determined until an unoccupied RE (idle RE) is found, and the CSI modulated symbol is mapped to the idle RE.

An implementation of the first mapping pattern is introduced below in Embodiment Three.

### Embodiment Three:

In this embodiment, within the same RB, the symbols and subcarriers corresponding to the REs to which respective HARQ modulated symbols are mapped are different. This mapping manner may be referred to as an "interleaved" mapping manner.

Taking FIG. 5A as an example, in the example of FIG. 5A, the PUSCH bandwidth includes 1 RB, which comprises 12 subcarriers (denoted as subcarrier 1 to subcarrier 12), and the PUSCH includes 14 symbols in the time domain (denoted as symbol 1 to symbol 14). The UCI modulated symbols include 12 HARQ modulated symbols (denoted as HARQ modulated symbols 1 to 12). According to the first mapping pattern, HARQ modulated symbol 1 is mapped to the RE corresponding to subcarrier 1 and symbol 1, and CSI modulated symbols may be mapped to other REs corresponding to subcarrier 1 (CSI modulated symbols are not shown in FIG. 5A). HARQ modulated symbol 2 is mapped to the RE corresponding to subcarrier 2 and symbol 2, and CSI modulated symbols are mapped to other REs corresponding to subcarrier 2, and so on.

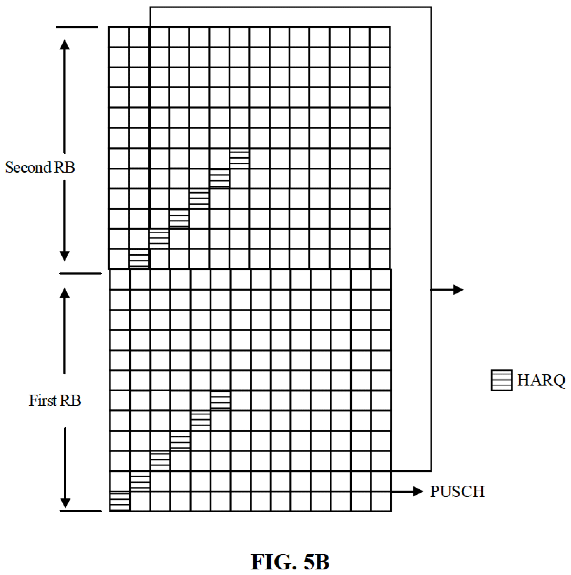

In some examples, the first mapping pattern in different RBs of the PUSCH bandwidth may be the same or different. Taking FIG. 5B as an example, in the example of FIG. 5B, the PUSCH bandwidth includes 2 RBs, each RB including 12 subcarriers (denoted as subcarrier 1 to subcarrier 12), and the PUSCH includes 14 symbols in the time domain (denoted as symbol 1 to symbol 14). The UCI modulated symbols include 12 HARQ modulated symbols (denoted as HARQ modulated symbol 1 to HARQ modulated symbol 12), wherein 6 HARQ modulated symbols are mapped to the first RB of the PUSCH bandwidth, and the other 6 HARQ modulated symbols are mapped to the second RB of the PUSCH bandwidth. According to the first mapping pattern, HARQ modulated symbol 1 is mapped to the RE corresponding to subcarrier 1 and symbol 1 of the first RB, and CSI modulated symbols are mapped to other REs corresponding to subcarrier 1 of the first RB (CSI modulated symbols are not shown in FIG. 5B). HARQ modulated symbol 2 is mapped to the RE corresponding to subcarrier 2 and symbol 2 of the first RB, and CSI modulated symbols are mapped to other REs corresponding to subcarrier 2 of the first RB, and so on, until HARQ modulated symbol 6 is mapped to the RE corresponding to subcarrier 6 and symbol 6 of the first RB, and CSI modulated symbols are mapped to other REs corresponding to subcarrier 6 of the first RB. HARQ modulated symbol 7 is mapped to the RE corresponding to subcarrier 1 and symbol 2 of the second RB, and CSI modulated symbols are mapped to other REs corresponding to subcarrier 1 of the second RB. HARQ modulated symbol 8 is mapped to the RE corresponding to subcarrier 2 and symbol 3 of the second RB, and CSI modulated symbols are mapped to other REs corresponding to subcarrier 2 of the second RB, and so on until HARQ modulated symbol 12 is mapped to the RE corresponding to subcarrier 6 and symbol 7 of the second RB, and CSI modulated symbols are mapped to other REs corresponding to subcarrier 6 of the second RB. It can be seen from FIG. 5B that the first mapping pattern in the first RB and the second RB of the PUSCH bandwidth is different, and interleaved mapping is adopted in each RB.

In some examples, the first mapping pattern in different Resource Block Groups (RBGs) of the PUSCH bandwidth may be the same or different. An RBG may include a plurality of RBs.

The above embodiments related to interleaving are described by taking interleaved mapping of HARQ modulated symbols as an example. Embodiments of the present disclosure may also perform interleaved mapping on CSI part 1, CSI part 2, or other contents, which will not be listed one by one here. Mapping different contents of UCI modulated symbols in an interleaved manner can further improve diversity gain.

### Embodiment Four:

In Embodiments One to Three above, the UCI modulated symbols are mapped to one transmission layer of the PUSCH as an example. This embodiment introduces mapping different types of modulated symbols included in the UCI modulated symbols to a plurality of different transmission layers of the PUSCH.

In some examples, the terminal device transmits UCI in the PUSCH using the first mapping pattern, comprising: the terminal device transmits HARQ in a first transmission layer set of the PUSCH using the first mapping pattern; and/or the terminal device transmits CSI in a second transmission layer set of the PUSCH using the first mapping pattern. Here, the first transmission layer set includes one or more PUSCH transmission layers, and the second transmission layer set includes one or more PUSCH transmission layers. In this embodiment, UCI does not need to be mapped to all PUSCH transmission layers.

For example, HARQ modulated symbols are mapped to the first transmission layer set, and CSI modulated symbols are mapped to the second transmission layer set. The transmission layers included in the first transmission layer set and the second transmission layer set are different. The first transmission layer set includes one or more transmission layers, and the second transmission layer set includes one or more transmission layers.

In one example, if the number of transmission layers of the PUSCH is 1, all UCI modulated symbols are mapped to the PUSCH transmission layer.

In one example, if the number of transmission layers of the PUSCH is greater than 1 and even, the number of transmission layers included in the first transmission layer set and the number of transmission layers included in the second transmission layer set are the same, each being half of the number of transmission layers of the PUSCH.

In one example, if the number of transmission layers of the PUSCH is greater than 1 and odd, the first transmission layer set includes one transmission layer, and the second transmission layer set includes the remaining transmission layers.

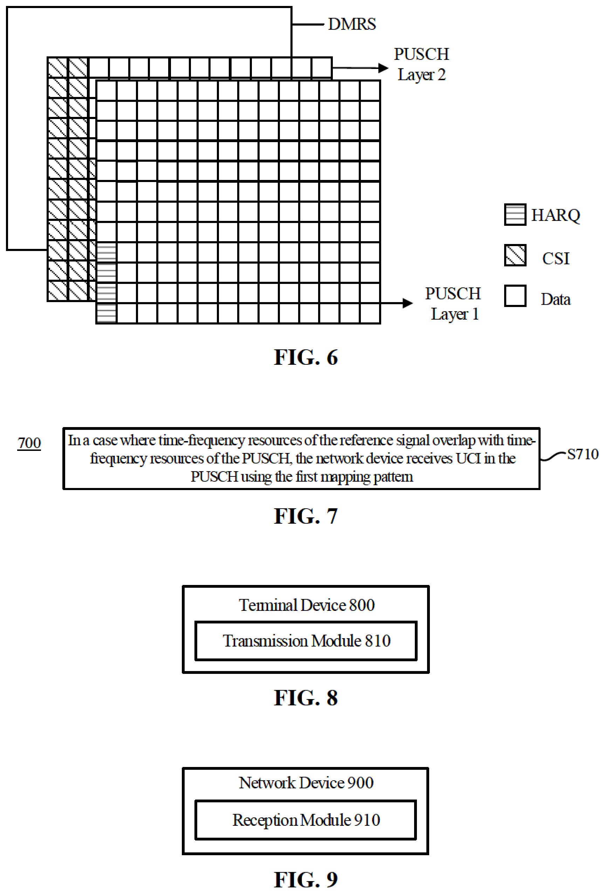

FIG. 6 is a schematic diagram of a mapping manner of this embodiment. As shown in FIG. 6, transmission layers of the PUSCH includes layer 1 and layer 2. HARQ modulated symbols are mapped to layer 1 using the first mapping pattern, and CSI modulated symbols are mapped to layer 2 using the first mapping pattern. The first mapping pattern adopted by the HARQ modulated symbols and the first mapping pattern adopted by the CSI modulated symbols may be any of those described in Embodiments One to Three above.

In one example, the power allocation to the transmission layer set for mapping HARQ modulated symbols and the power allocation to the transmission layer set for mapping CSI modulated symbols may be different. For example, more power may be allocated to the transmission layers for mapping HARQ modulated symbols, which helps improve the success rate of HARQ monitoring.

### Embodiment Five:

In a case where frequency hopping is enabled for the PUSCH, the terminal device transmits UCI in the PUSCH using the first mapping pattern, comprising:
the terminal device transmits a first part of modulated symbols of UCI in a first hop of the PUSCH using the first mapping pattern; and/or the terminal device transmits a second part of modulated symbols of UCI in a second hop of the PUSCH using the first mapping pattern.

The above UCI modulated symbols may be different types of modulated symbols, such as HARQ modulated symbols, CSI modulated symbols, modulated symbols of CSI part 1, modulated symbols of CSI part 2, etc.

Taking HARQ modulated symbols as an example, in one example, if frequency hopping is enabled for the PUSCH, K1 HARQ modulated symbols are divided into two parts, where the first part of HARQ modulated symbols are mapped in the first hop of the PUSCH, and the second part of HARQ modulated symbols are mapped in the second hop of the PUSCH. The numbers of HARQ modulated symbols corresponding to the first part and the second part are floor(K1/2) and ceil(K1/2), respectively, where K1 is the number of HARQ modulated symbols. The mapping manner of HARQ modulated symbols in each hop of the PUSCH may adopt any manner described in the foregoing embodiments.

If frequency hopping is enabled for the PUSCH, K2 modulated symbols of CSI part 1 are divided into two parts, the first part being mapped in the first hop of the PUSCH and the second part being mapped in the second hop of the PUSCH. The numbers of modulated symbols of CSI part 1 corresponding to the first part and the second part are floor(K2/2) and ceil(K2/2), respectively, where K2 is the number of modulated symbols of CSI part 1. The mapping manner of modulated symbols of CSI part 1 in each hop of the PUSCH may adopt any manner described in the foregoing embodiments.

If frequency hopping is enabled for the PUSCH, K3 modulated symbols of CSI part 2 are divided into two parts, the first part being mapped in the first hop of the PUSCH and the second part being mapped in the second hop of the PUSCH. The numbers of modulated symbols of CSI part 2 corresponding to the first part and the second part are floor(K3/2) and ceil(K3/2), respectively, where K3 is the number of modulated symbols of CSI part 2. The mapping manner of modulated symbols of CSI part 2 in each hop of the PUSCH may adopt any manner described in the foregoing embodiments.

This embodiment takes into account the case of PUSCH frequency hopping and designs a method for mapping UCI modulated symbols in the presence of frequency hopping. The same or different mapping manners may be adopted to transmit UCI in each hop of the PUSCH.

### Embodiment Six:

In this embodiment, the number of PUSCH transmission layers is greater than 1. The network device can flexibly configure different PUSCH transmission layers.

In some implementations, when the number of PUSCH transmission layers is equal to 1, UCI modulated symbols may be mapped using the first mapping pattern, with reference to the first mapping pattern described in Embodiments One to Five. When the number of PUSCH transmission layers is greater than 1, an existing mapping pattern in the existing technology may be adopted to map UCI modulated symbols, so that the existing technology can be directly used without new design.

In other implementations, when the number of PUSCH transmission layers is equal to 1, UCI modulated symbols may be mapped using the first mapping pattern, with reference to the first mapping pattern described in Embodiments One to Five. When the number of PUSCH transmission layers is greater than 1, UCI modulated symbols may be mapped using the first mapping pattern, and no UCI modulated symbols are mapped to REs on which orthogonal DMRS are located, so that demodulation of orthogonal DMRS is not affected.

When the number of PUSCH transmission layers is 1, the network device may configure that pilots and data in the PUSCH transmission layer are transmitted in a non-orthogonal manner, that is, the time-frequency resources of DMRS overlap with the time-frequency resources of the PUSCH.

An embodiment of the present disclosure further provides a method for mapping UCI, which may be applied to a network device. FIG. 7 is a schematic flowchart of a method 700 for mapping UCI according to an embodiment of the present disclosure. The method may be optionally applied to the system shown in FIG. 1, but is not limited thereto. The method includes at least part of the following content.

At operation S710, when the time-frequency resources of the reference signal overlap with the time-frequency resources of the PUSCH, the network device receives UCI in the PUSCH using the first mapping pattern.

Adopting the first mapping pattern can solve the problem of mapping and reception of UCI modulated symbols when the time-frequency resources of the reference signal overlap with the time-frequency resources of the PUSCH.

In some implementations, the first mapping pattern includes one or more of the following:
mapping start positions of a plurality of UCI modulated symbols;
a mapping manner of the plurality of UCI modulated symbols;
a grouping situation of the plurality of UCI modulated symbols;
a mapping situation of each group of a plurality of UCI modulated symbols.

In some implementations, the mapping start positions of the plurality of UCI modulated symbols include one or more of the following:
[0255]the RE corresponding to the first symbol of the PUSCH in the time domain and the first subcarrier of the PUSCH bandwidth;
the RE corresponding to the last symbol of the PUSCH in the time domain and the first subcarrier of the PUSCH bandwidth; and
the RE corresponding to the n-th symbol of the PUSCH in the time domain and the first subcarrier of the PUSCH bandwidth, where n is a positive integer.

In some implementations, the mapping manner of the plurality of UCI modulated symbols include one or more of the following:
the plurality of UCI modulated symbols are first mapped to all or part of REs corresponding to the start symbol, and then mapped to REs corresponding to symbol(s) before or after the start symbol, wherein the start symbol includes the symbol corresponding to the mapping start position;
the plurality of UCI modulated symbols are first mapped to all or part of REs corresponding to the start subcarrier, and then mapped to REs corresponding to subcarrier(s) before or after the start subcarrier, wherein the start subcarrier includes the subcarrier corresponding to the mapping start position.

In some implementations, the grouping situation of the plurality of UCI modulated symbols comprises:
the plurality of UCI modulated symbols are divided into a plurality of groups, each group including one or more UCI modulated symbols.
In some implementations, the mapping situation of each group of the plurality of UCI modulated symbols comprises:
at least one of a mapping start position or a mapping range of each group of the plurality of UCI modulated symbols. The mapping range may include a time-domain range, such as the number of occupied symbols.

In some implementations, in a case where the plurality of UCI modulated symbols are divided into two groups, namely a first group and a second group, the mapping situation of each group of the plurality of UCI modulated symbols comprises:
the mapping start position of the first group comprises the RE corresponding to the first symbol of the PUSCH in the time domain and the first subcarrier of the PUSCH bandwidth; and
the mapping start position of the second group comprises the RE corresponding to the first symbol of the PUSCH in the time domain and the last subcarrier of the PUSCH bandwidth.

When UCI modulated symbols are divided into two groups, the number of UCI modulated symbols included in each group may be floor(m/2) and ceil(m/2), respectively, where m is the number of UCI modulated symbols, floor() represents rounding down, and ceil() represents rounding up.

In some examples, HARQ modulated symbols and CSI modulated symbols may adopt different mapping patterns. In the case of adopting a distributed mapping pattern, HARQ modulated symbols and CSI modulated symbols may be grouped separately.

In some implementations, in a case where the plurality of UCI modulated symbols are divided into two groups, namely a first group and a second group, the mapping situation of each group of the plurality of UCI modulated symbols comprises:
[0271]the mapping start position of the first group comprises the RE corresponding to the first symbol of the PUSCH in the time domain and the first subcarrier of the PUSCH bandwidth;
[0272]the mapping start position of the second group comprises the RE corresponding to the (m1+1)-th symbol of the PUSCH in the time domain and the last subcarrier of the PUSCH bandwidth, where m1 is the number of UCI modulated symbols included in the first group.

In some implementations, in a case where the plurality of UCI modulated symbols are divided into two groups, namely a first group and a second group, the mapping situation of each group of the plurality of UCI modulated symbols comprises:
[0274]the mapping start position of the first group comprises the RE corresponding to the first symbol of the PUSCH in the time domain and the last subcarrier of the PUSCH bandwidth; and
[0275]the mapping start position of the second group comprises the RE corresponding to the (m2+1)-th symbol of the PUSCH in the time domain and the first subcarrier of the PUSCH bandwidth, where m2 is the number of UCI modulated symbols included in the first group.

The UCI modulated symbols may include HARQ modulated symbols and CSI modulated symbols. HARQ modulated symbols distributed at both ends of the PUSCH bandwidth can achieve greater frequency-domain diversity gain. HARQ modulated symbols mapped to only one symbol can ensure frequency-domain diversity gain. Alternatively, HARQ modulated symbols of each group mapped to more than one symbol can improve the reliability of HARQ transmission, enhance HARQ detection performance, and enlarge the coverage of HARQ transmission.

In some implementations, in a case where the plurality of UCI modulated symbols are divided into two groups, namely a first group and a second group, the mapping situation of each group of the plurality of UCI modulated symbols comprises:
the mapping range of the first group includes d1 symbols, where d1 is a positive integer; and/or
the mapping range of the second group includes d2 symbols, where d2 is a positive integer.

In some implementations, the d1 symbols and the d2 symbols do not overlap.

The HARQ modulated symbols of each group are mapped to more than one symbol, and the HARQ modulated symbols of different groups are mapped to different time-domain resources, which can improve the reliability of HARQ transmission, enhance HARQ detection performance, and enlarge the coverage of HARQ transmission.

In some implementations, d1 is equal to the number of symbols of the PUSCH, and d2 is equal to the number of symbols of the PUSCH. The HARQ modulated symbols of each group are mapped to more than one symbol, which can improve the reliability of HARQ transmission, enhance HARQ detection performance, and enlarge the coverage of HARQ transmission.

In some implementations, the mapping order of UCI is: mapping HARQ first, and then mapping CSI.

In some implementations, HARQ includes legacy HARQ and HARQ related to a neural network system.

In some implementations, CSI includes one or more of CRI, RI, CQI, and PMI.

In some implementations, CSI includes one or more of CSI part 1, CSI part 2, and CSI related to a neural network system.

In some implementations, the first mapping pattern of HARQ and the first mapping pattern of CSI may be the same or different. Different modulated symbols in HARQ modulated symbols and different modulated symbols in CSI modulated symbols may be mapped separately, and may be mapped using the same or different first mapping patterns.

In some implementations, when mapping a CSI modulated symbol, if the RE determined according to the first mapping pattern of CSI is occupied by an HARQ modulated symbol, the CSI modulated symbol is mapped to the next RE.

In some implementations, within the same RB, the symbols and subcarriers corresponding to the REs to which respective HARQ modulated symbols are mapped are different. Mapping different contents of UCI modulated symbols in this manner can further improve diversity gain.

In one example, the first mapping pattern of the PUSCH in different RBs may be the same or different.

In one example, the first mapping pattern of the PUSCH in different RBGs may be the same or different.

In some implementations, the operation of receiving, by the network device, UCI in the PUSCH using the first mapping pattern comprises:
the network device receives HARQ in a first transmission layer set of the PUSCH using the first mapping pattern; and/or
the network device receives CSI in a second transmission layer set of the PUSCH using the first mapping pattern;
where the first transmission layer set includes one or more PUSCH transmission layers, and the second transmission layer set includes one or more PUSCH transmission layers.

In this way, different UCI can be received in different PUSCH transmission layers.

In some implementations, in a case where frequency hopping is enabled for the PUSCH, the operation of receiving, by the network device, UCI in the PUSCH using the first mapping pattern comprises:
the network device receives a first part of modulated symbols of UCI in a first hop of the PUSCH using the first mapping pattern; and/or
the network device receives a second part of modulated symbols of UCI in a second hop of the PUSCH using the first mapping pattern.

In this way, UCI can be received using the same or different first mapping patterns in the respective hops of the PUSCH.

In some implementations, the network device may receive UCI by using an advanced receiver. For example, the advanced receiver may include an AI receiver. By using the advanced receiver, effective channel estimation can be realized from the hybrid transmission of pilot and data, or data reception can be realized.

FIG. 8 is a schematic block diagram of a terminal device 800 according to an embodiment of the present disclosure. The terminal device 800 may include a transmission module 810.

The transmission module 810 is configured to transmit UCI in a PUSCH by using a first mapping pattern, in a case where time-frequency resources of a reference signal overlap with time-frequency resources of the PUSCH.

In some implementations, the first mapping pattern includes one or more of the following:
a mapping start position of a plurality of UCI modulated symbols;
a mapping manner of the plurality of UCI modulated symbols;
a grouping situation of the plurality of UCI modulated symbols;
a mapping situation of each group of the plurality of UCI modulated symbols.

In some implementations, the mapping start position of the plurality of UCI modulated symbols include one or more of the following:
an RE corresponding to a first symbol of the PUSCH in a time domain and a first subcarrier of a PUSCH bandwidth;
an RE corresponding to a last symbol of the PUSCH in the time domain and the first subcarrier of the PUSCH bandwidth; and
an RE corresponding to an n-th symbol of the PUSCH in the time domain and the first subcarrier of the PUSCH bandwidth, where n is a positive integer.

In some implementations, mapping manner of the plurality of UCI modulated symbols include one or more of the following:
the plurality of UCI modulated symbols are first mapped to all or part of REs corresponding to a start symbol, and then mapped to REs corresponding to symbol(s) before or after the start symbol, where the start symbol includes a symbol corresponding to the mapping start position;
the plurality of UCI modulated symbols are first mapped to all or part of REs corresponding to a start subcarrier, and then mapped to REs corresponding to subcarrier(s) before or after the start subcarrier, where the start subcarrier includes a subcarrier corresponding to the mapping start position.

In some implementations, the grouping situation of the plurality of UCI modulated symbols includes:
the plurality of UCI modulated symbols are divided into a plurality of groups, each group including one or more UCI modulated symbols.

In some implementations, the mapping situation of each group of the plurality of UCI modulated symbols includes:
at least one of a mapping start position or a mapping range of each group of the plurality of UCI modulated symbols.

In some implementations, in a case where the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the first subcarrier of the PUSCH bandwidth; and
a mapping start position of the second group includes an RE corresponding to the first symbol of the PUSCH in the time domain and a last subcarrier of the PUSCH bandwidth.

In some implementations, in a case where the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the first subcarrier of the PUSCH bandwidth;
a mapping start position of the second group includes an RE corresponding to an (m1+1)-th symbol of the PUSCH in the time domain and the last subcarrier of the PUSCH bandwidth, where m1 is the number of UCI modulated symbols included in the first group.

In some implementations, in a case where the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the last subcarrier of the PUSCH bandwidth;
a mapping start position of the second group includes an RE corresponding to an (m2+1)-th symbol of the PUSCH in the time domain and the first subcarrier of the PUSCH bandwidth, where m2 is the number of UCI modulated symbols included in the first group.

In some implementations, in a case where the plurality of UCI modulated symbols are divided into two groups including a first group and a second group, the mapping situation of each group of the plurality of UCI modulated symbols includes:
a mapping range of the first group includes d1 symbols, where d1 is a positive integer; and/or
a mapping range of the second group includes d2 symbols, where d2 is a positive integer.

In some implementations, the d1 symbols and the d2 symbols do not overlap.

In some implementations, d1 is equal to the number of symbols of the PUSCH, and d2 is equal to the number of symbols of the PUSCH.

In some implementations, the UCI includes HARQ and/or CSI.

In some implementations, a mapping order of the UCI is: mapping HARQ first, and then mapping CSI.

In some implementations, the HARQ includes legacy HARQ and HARQ related to a neural network system.

In some implementations, the CSI includes one or more of CRI, RI, CQI and PMI.

In some implementations, the CSI includes one or more of CSI part 1, CSI part 2 and CSI related to a neural network system.

In some implementations, the first mapping pattern of the HARQ is the same as or different from the first mapping pattern of the CSI.

In some implementations, when mapping a CSI modulated symbol, if an RE determined according to the first mapping pattern of the CSI is occupied by an HARQ modulated symbol, the CSI modulated symbol is mapped to a next RE.

In some implementations, within a same RB, symbols and subcarriers corresponding to REs to which respective HARQ modulated symbols are mapped are different.

In some implementations, the first mapping pattern of the PUSCH in different RBs is the same or different.

In some implementations, the first mapping pattern of the PUSCH in different RBGs is the same or different.

In some implementations, the transmission module 810 is configured to:
transmit HARQ in a first transmission layer set of the PUSCH by using the first mapping pattern; and/or
transmit CSI in a second transmission layer set of the PUSCH by using the first mapping pattern,
where the first transmission layer set includes one or more PUSCH transmission layers, and the second transmission layer set includes one or more PUSCH transmission layers.

In some implementations, in a case where frequency hopping is enabled for the PUSCH, the transmission module 810 is configured to:
transmit a first part of modulated symbols of the UCI in a first hop of the PUSCH by using the first mapping pattern; and/or
transmit a second part of modulated symbols of the UCI in a second hop of the PUSCH by using the first mapping pattern.

The terminal device 800 in the embodiments of the present disclosure can implement corresponding functions of the terminal device in the foregoing method embodiments. For processes, functions, implementation manners and beneficial effects corresponding to each module (sub-module, unit, component, etc.) in the terminal device 800, reference may be made to corresponding descriptions in the foregoing method embodiments, and details are not described herein again. It should be noted that the functions described for each module (sub-module, unit, component, etc.) in the terminal device 800 in the embodiments of the present disclosure may be implemented by different modules (sub-modules, units, components, etc.), or may be implemented by a same module (sub-module, unit, component, etc.).

FIG. 9 is a schematic block diagram of a network device 900 according to an embodiment of the present disclosure. The network device 900 may include a receiving module 910.

The receiving module 910 is configured to receive UCI in a PUSCH by using a first mapping pattern, in a case where time-frequency resources of a reference signal overlap with time-frequency resources of the PUSCH.

In some implementations, the first mapping pattern includes one or more of the following:
a mapping start position of a plurality of UCI modulated symbols;
a mapping manner of the plurality of UCI modulated symbols;
a grouping situation of the plurality of UCI modulated symbols;
a mapping situation of each group of the plurality of UCI modulated symbols.

In some implementations, the mapping start position of the plurality of UCI modulated symbols includes one or more of the following:
an RE corresponding to a first symbol of the PUSCH in a time domain and a first subcarrier of a PUSCH bandwidth;
an RE corresponding to a last symbol of the PUSCH in the time domain and the first subcarrier of the PUSCH bandwidth; and
an RE corresponding to an n-th symbol of the PUSCH in the time domain and the first subcarrier of the PUSCH bandwidth, where n is a positive integer.

In some implementations, mapping manner of the plurality of UCI modulated symbols include one or more of the following:
the plurality of UCI modulated symbols are first mapped to all or part of REs corresponding to a start symbol, and then mapped to REs corresponding to symbol(s) before or after the start symbol, where the start symbol includes a symbol corresponding to the mapping start position; and
the plurality of UCI modulated symbols are first mapped to all or part of REs corresponding to a start subcarrier, and then mapped to REs corresponding to subcarrier(s) before or after the start subcarrier, where the start subcarrier includes a subcarrier corresponding to the mapping start position.

In some implementations, the grouping situation of the plurality of UCI modulated symbols includes:
the plurality of UCI modulated symbols are divided into a plurality of groups, each group including one or more UCI modulated symbols.

In some implementations, the mapping situation of each group of the plurality of UCI modulated symbols includes:
at least one of a mapping start position or a mapping range of each group of the plurality of UCI modulated symbols.

In some implementations, in a case wheree the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the first subcarrier of the PUSCH bandwidth;
a mapping start position of the second group includes an RE corresponding to the first symbol of the PUSCH in the time domain and a last subcarrier of the PUSCH bandwidth.

In some implementations, in a case where the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the first subcarrier of the PUSCH bandwidth;
a mapping start position of the second group includes an RE corresponding to an (m1+1)-th symbol of the PUSCH in the time domain and the last subcarrier of the PUSCH bandwidth, where m1 is the number of UCI modulated symbols included in the first group.

In some implementations, in a case where the plurality of UCI modulated symbols are divided into two groups including a first group and a second group, the mapping situation of each group of the plurality of UCI modulated symbols includes:
a mapping start position of the first group includes an RE corresponding to the first symbol of the PUSCH in the time domain and the last subcarrier of the PUSCH bandwidth; and
a mapping start position of the second group includes an RE corresponding to an (m2+1)-th symbol of the PUSCH in the time domain and the first subcarrier of the PUSCH bandwidth, where m2 is the number of UCI modulated symbols included in the first group.

In some implementations, in a case where the plurality of UCI modulated symbols are divided into two groups including a first group and a second group, the mapping situation of each group of the plurality of UCI modulated symbols includes:
a mapping range of the first group includes d1 symbols, where d1 is a positive integer; and/or
a mapping range of the second group includes d2 symbols, where d2 is a positive integer.

In some implementations, the d1 symbols and the d2 symbols do not overlap.

In some implementations, d1 is equal to the number of symbols of the PUSCH, and d2 is equal to the number of symbols of the PUSCH.

In some implementations, the UCI includes HARQ and/or CSI.

In some implementations, a mapping order of the UCI is: mapping HARQ first, and then mapping CSI.

In some implementations, the HARQ includes legacy HARQ and HARQ related to a neural network system.

In some implementations, the CSI includes one or more of CRI, RI, CQI and PMI.

In some implementations, the CSI includes one or more of CSI part 1, CSI part 2 and CSI related to a neural network system.

In some implementations, the first mapping pattern of the HARQ is the same as or different from the first mapping pattern of the CSI.

In some implementations, when mapping a CSI modulated symbol, if an RE determined according to the first mapping pattern of the CSI is occupied by an HARQ modulated symbol, the CSI modulated symbol is mapped to a next RE.

In some implementations, within a same RB, symbols and subcarriers corresponding to REs to which respective HARQ modulated symbols are mapped are different.

In some implementations, the first mapping pattern of the PUSCH in different RBs is the same or different.

In some implementations, the first mapping pattern of the PUSCH in different RBGs is the same or different.

In some implementations, the receiving module 910 is configured to:
receive HARQ in a first transmission layer set of the PUSCH by using the first mapping pattern; and/or
receive CSI in a second transmission layer set of the PUSCH by using the first mapping pattern,
where the first transmission layer set includes one or more PUSCH transmission layers, and the second transmission layer set includes one or more PUSCH transmission layers.

In some implementations, in a case where frequency hopping is enabled for the PUSCH, the receiving module 910 is configured to:
receive a first part of modulated symbols of the UCI in a first hop of the PUSCH by using the first mapping pattern; and/or
receive a second part of modulated symbols of the UCI in a second hop of the PUSCH by using the first mapping pattern.

In some implementations, the receiving module 910 is configured to receive UCI by using an advanced receiver.

The network device 900 in the embodiments of the present disclosure can implement corresponding functions of the network device in the foregoing method embodiments. For processes, functions, implementation manners and beneficial effects corresponding to each module (sub-module, unit, component, etc.) in the network device 900, reference may be made to corresponding descriptions in the foregoing method embodiments, and details are not described herein again. It should be noted that the functions described for each module (sub-module, unit, component, etc.) in the network device 900 in the embodiments of the present disclosure may be implemented by different modules (sub-modules, units, components, etc.), or may be implemented by the same module (sub-module, unit, component, etc.).

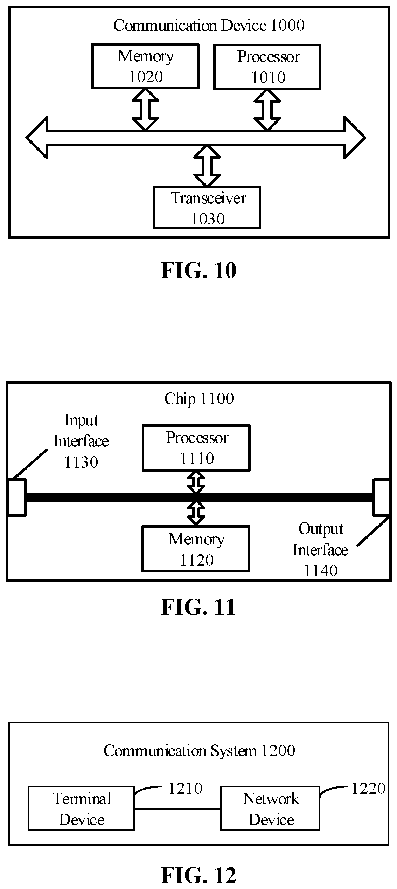

FIG. 10 is a schematic structural diagram of a communication device 1000 according to an embodiment of the present disclosure. The communication device 1000 includes a processor 1010, and the processor 1010 can call and run a computer program from a memory, so that the communication device 1000 implements the method in the embodiments of the present disclosure.

In an implementation manner, the communication device 1000 may further include a memory 1020. The processor 1010 can call and run the computer program from the memory 1020, so that the communication device 1000 implements the method in the embodiments of the present disclosure.

The memory 1020 may be a separate device independent of the processor 1010, or may be integrated in the processor 1010.

In an implementation manner, the communication device 1000 may further include a transceiver 1030, and the processor 1010 can control the transceiver 1030 to communicate with other devices, specifically, send information or data to other devices, or receive information or data transmitted by other devices.

The transceiver 1030 may include a transmitter and a receiver. The transceiver 1030 may further include antennas, and the number of antennas may be one or more.

In an implementation manner, the communication device 1000 may be the network device in the embodiments of the present disclosure, and the communication device 1000 may implement corresponding processes implemented by the network device in various methods in the embodiments of the present disclosure, which are not repeated herein for brevity.

In an implementation manner, the communication device 1000 may be the terminal device in the embodiments of the present disclosure, and the communication device 1000 may implement corresponding processes implemented by the terminal device in various methods in the embodiments of the present disclosure, which are not repeated herein for brevity.

FIG. 11 is a schematic structural diagram of a chip 1100 according to an embodiment of the present disclosure. The chip 1100 includes a processor 1110, and the processor 1110 can call and run a computer program from a memory to implement the method in the embodiments of the present disclosure.

In an implementation manner, the chip 1100 may further include a memory 1120. The processor 1110 can call and run the computer program from the memory 1120 to implement the method executed by the terminal device or the network device in the embodiments of the present disclosure.

The memory 1120 may be a separate device independent of the processor 1110, or may be integrated in the processor 1110.

In an implementation manner, the chip 1100 may further include an input interface 1130. The processor 1110 can control the input interface 1130 to communicate with other devices or chips, specifically, obtain information or data transmitted by other devices or chips.

In an implementation manner, the chip 1100 may further include an output interface 1140. The processor 1110 can control the output interface 1140 to communicate with other devices or chips, specifically, output information or data to other devices or chips.

In an implementation manner, the chip may be applied to the network device in the embodiments of the present disclosure, and the chip may implement corresponding processes implemented by the network device in various methods in the embodiments of the present disclosure, which are not repeated herein for brevity.

In an implementation manner, the chip may be applied to the terminal device in the embodiments of the present disclosure, and the chip may implement corresponding processes implemented by the terminal device in various methods in the embodiments of the present disclosure, which are not repeated herein for brevity.

The chips applied to the network device and the terminal device may be the same chip or different chips.

It should be understood that the chip mentioned in the embodiments of the present disclosure may also be referred to as a system-level chip, a system chip, a chip system, or a system-on-chip, etc.

The processor mentioned above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor mentioned above may be a microprocessor or any legacy processor.

The memory mentioned above may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is an exemplary and non-restrictive description. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), etc. That is to say, the memory in the embodiments of the present disclosure is intended to include, but is not limited to, these and any other suitable types of memories.

FIG. 12 is a schematic block diagram of a communication system 1200 according to an embodiment of the present disclosure. The communication system 1200 includes a terminal device 1210 and a network device 1220.

The terminal device 1210 is configured to transmit UCI in a PUSCH by using a first mapping pattern when time-frequency resources of a reference signal overlap with time-frequency resources of the PUSCH.

The network device 1220 is configured to receive UCI in the PUSCH by using the first mapping pattern when the time-frequency resources of the reference signal overlap with the time-frequency resources of the PUSCH.

The terminal device 1210 may be configured to implement corresponding functions implemented by the terminal device in the foregoing method, and the network device 1220 may be configured to implement corresponding functions implemented by the network device in the foregoing method, which are not repeated herein for brevity.

In the foregoing embodiments, the implementation may be implemented in whole or in part by software, hardware, firmware, or any combination thereof. When implemented by software, it may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (e.g., coaxial cable, optical fiber, digital subscriber line (DSL)) or wireless (e.g., infrared, wireless, microwave, etc.) manner. The computer-readable storage medium may be any available medium that can be accessed by a computer or a data storage device such as a server or data center integrating one or more available media. The available medium may be a magnetic medium (e.g., floppy disk, hard disk, magnetic tape), an optical medium (e.g., DVD), or a semiconductor medium (e.g., solid state disk (SSD)).

It should be understood that, in various embodiments of the present disclosure, the sequence numbers of the foregoing processes do not mean the order of execution, and the execution order of the processes should be determined by their functions and internal logic, which should not constitute any limitation to the implementation processes of the embodiments of the present disclosure.

Those skilled in the art can clearly understand that, for the convenience and brevity of description, the specific working processes of the systems, apparatuses and units described above may refer to the corresponding processes in the foregoing method embodiments, and details are not described herein again.

The foregoing descriptions are merely specific embodiments of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for mapping uplink control information (UCI), comprising:
in a case where time-frequency resources of a reference signal overlap with time-frequency resources of a Physical Uplink Shared Channel (PUSCH), transmitting, by a terminal device, UCI in the PUSCH by using a first mapping pattern.

2. The method according to claim 1, wherein the first mapping pattern comprises one or more of the following:
a mapping start position of a plurality of UCI modulated symbols;
a mapping manner of the plurality of UCI modulated symbols;
a grouping situation of the plurality of UCI modulated symbols; and
a mapping situation of each group of the plurality of UCI modulated symbols.

3. The method according to claim 2, wherein the mapping start position of the plurality of UCI modulated symbols comprises one or more of the following:
a Resource Element (RE) corresponding to a first symbol of the PUSCH in a time domain and a first subcarrier of a PUSCH bandwidth;
an RE corresponding to a last symbol of the PUSCH in the time domain and the first subcarrier of the PUSCH bandwidth; and
an RE corresponding to an n-th symbol of the PUSCH in the time domain and the first subcarrier of the PUSCH bandwidth, wherein n is a positive integer.

4. The method according to claim 2, wherein the mapping manner of the plurality of UCI modulated symbols comprises one or more of the following:
the plurality of UCI modulated symbols being first mapped to all or part of REs corresponding to a start symbol, and then mapped to REs corresponding to symbol(s) before or after the start symbol, wherein the start symbol comprises a symbol corresponding to the mapping start position; and
the plurality of UCI modulated symbols being first mapped to all or part of REs corresponding to a start subcarrier, and then mapped to REs corresponding to subcarrier(s) before or after the start subcarrier, wherein the start subcarrier comprises a subcarrier corresponding to the mapping start position.

5. The method according to claim 2, wherein the grouping situation the plurality of UCI modulated symbols comprises:
the plurality of UCI modulated symbols being divided into a plurality of groups, each group comprising one or more UCI modulated symbols.

6. The method according to claim 5, wherein the mapping situation of each group of the plurality of UCI modulated symbols comprises:
at least one of the mapping start position or a mapping range of each group of the plurality of UCI modulated symbols.

7. The method according to claim 6, wherein in a case where the plurality of UCI modulated symbols are divided into two groups including a first group and a second group, the mapping situation of each group of the plurality of UCI modulated symbols comprises:
a mapping start position of the first group comprising an RE corresponding to a first symbol of the PUSCH in the time domain and a first subcarrier of a PUSCH bandwidth; and
a mapping start position of the second group comprises an RE corresponding to the first symbol of the PUSCH in the time domain and a last subcarrier of the PUSCH bandwidth.

8. The method according to claim 6, wherein in a case where the plurality of UCI modulated symbols are divided into two groups including a first group and a second group, the mapping situation of each group of the plurality of UCI modulated symbols comprises:
a mapping start position of the first group comprising an RE corresponding to a first symbol of the PUSCH in the time domain and a first subcarrier of a PUSCH bandwidth; and
a mapping start position of the second group comprising an RE corresponding to an (m1+1)-th symbol of the PUSCH in the time domain and a last subcarrier of the PUSCH bandwidth, wherein m1 is a number of UCI modulated symbols comprised in the first group.

9. The method according to claim 6, wherein in a case where the plurality of UCI modulated symbols are divided into two groups including a first group and a second group, the mapping situation of each group of the plurality of UCI modulated symbols comprises:
a mapping start position of the first group comprising an RE corresponding to a first symbol of the PUSCH in the time domain and a last subcarrier of a PUSCH bandwidth; and
a mapping start position of the second group comprises an RE corresponding to an (m2+1)-th symbol of the PUSCH in the time domain and a first subcarrier of the PUSCH bandwidth, wherein m2 is a number of UCI modulated symbols comprised in the first group.

10. The method according to any one of claims 7 to 9, wherein in the case where the plurality of UCI modulated symbols are divided into two groups including the first group and the second group, the mapping situation of each group of the plurality of UCI modulated symbols comprises:
d1 symbols being included in a mapping range of the first group, wherein d1 is a positive integer; and/or
d2 symbols being included in a mapping range of the second group, wherein d2 is a positive integer.

11. The method according to claim 10, wherein the d1 symbols and the d2 symbols do not overlap.

12. The method according to claim 10, wherein d1 is equal to a number of symbols of the PUSCH, and d2 is equal to the number of symbols of the PUSCH.

13. The method according to any one of claims 1 to 12, wherein the UCI comprises Hybrid Automatic Repeat reQuest (HARQ) and/or Channel State Information (CSI).

14. The method according to claim 13, wherein a mapping order of the UCI is: mapping HARQ first, then mapping CSI.

15. The method according to claim 13 or 14, wherein the HARQ comprises legacy HARQ and HARQ related to a neural network system.

16. The method according to claim 13 or 14, wherein the CSI comprises one or more of CSI-RS Resource Indicator (CRI), Rank Indicator (RI), Channel Quality Indicator (CQI), and Precoding Matrix Indicator (PMI).

17. The method according to claim 13 or 14, wherein the CSI comprises one or more of CSI part 1, CSI part 2 and CSI related to a neural network system.

18. The method according to claim 13 or 14, wherein the first mapping pattern of the HARQ is the same as or different from the first mapping pattern of the CSI.

19. The method according to any one of claims 13 to 18, wherein when mapping a CSI modulated symbol, if an RE determined according to the first mapping pattern of the CSI is occupied by an HARQ modulated symbol, mapping the CSI modulated symbol to a next RE.

20. The method according to any one of claims 13 to 17, wherein within a same Resource Block (RB), symbols and subcarriers corresponding to REs to which respective HARQ modulated symbols are mapped are different.

21. The method according to claim 20, wherein the first mapping pattern of the PUSCH in different RBs is the same or different.

22. The method according to claim 20, wherein the first mapping pattern of the PUSCH in different Resource Block Groups (RBGs) is the same or different.

23. The method according to any one of claims 1 to 22, wherein transmitting, by the terminal device, UCI in the PUSCH by using the first mapping pattern comprises:
transmitting, by the terminal device, HARQ in a first transmission layer set of the PUSCH by using the first mapping pattern; and/or
transmitting, by the terminal device, CSI in a second transmission layer set of the PUSCH by using the first mapping pattern;
wherein the first transmission layer set comprises one or more PUSCH transmission layers, and the second transmission layer set comprises one or more PUSCH transmission layers.

24. The method according to any one of claims 1 to 22, wherein in a case where frequency hopping is enabled for the PUSCH, transmitting, by the terminal device, UCI in the PUSCH by using the first mapping pattern comprises:
transmitting, by the terminal device, a first part of modulated symbols of the UCI in a first hop of the PUSCH by using the first mapping pattern; and/or
transmitting, by the terminal device, a second part of modulated symbols of the UCI in a second hop of the PUSCH by using the first mapping pattern.

25. A method for mapping uplink control information (UCI), comprising:
in a case where time-frequency resources of a reference signal overlap with time-frequency resources of a Physical Uplink Shared Channel (PUSCH), receiving, by a network device, UCI in the PUSCH by using a first mapping pattern.

26. The method according to claim 25, wherein the first mapping pattern comprises one or more of the following:
a mapping start position of a plurality of UCI modulated symbols;
a mapping manner of the plurality of UCI modulated symbols;
a grouping situation the plurality of UCI modulated symbols;
a mapping situation of each group of the plurality of UCI modulated symbols.

27. The method according to claim 26, wherein the mapping start position of the plurality of UCI modulated symbols comprises one or more of the following:
a Resource Element (RE) corresponding to a first symbol of the PUSCH in a time domain and a first subcarrier of a PUSCH bandwidth;
an RE corresponding to a last symbol of the PUSCH in the time domain and the first subcarrier of the PUSCH bandwidth; and
an RE corresponding to an n-th symbol of the PUSCH in the time domain and the first subcarrier of the PUSCH bandwidth, wherein n is a positive integer.

28. The method according to claim 26, wherein the mapping manner of the plurality of UCI modulated symbols comprises one or more of the following:
the plurality of UCI modulated symbols being first mapped to all or part of REs corresponding to a start symbol, and then mapped to REs corresponding to symbol(s) before or after the start symbol, wherein the start symbol comprises a symbol corresponding to the mapping start position; and
the plurality of UCI modulated symbols being first mapped to all or part of REs corresponding to a start subcarrier, and then mapped to REs corresponding to subcarrier(s) before or after the start subcarrier, wherein the start subcarrier comprises a subcarrier corresponding to the mapping start position.

29. The method according to claim 26, wherein the grouping situation the plurality of UCI modulated symbols comprises:
the plurality of UCI modulated symbols being divided into a plurality of groups, each group comprising one or more UCI modulated symbols.

30. The method according to claim 29, wherein the mapping situation of each group of the plurality of UCI modulated symbols comprises:
at least one of a mapping start position or a mapping range of each group of the plurality of UCI modulated symbols.

31. The method according to claim 30, wherein in a case where the plurality of UCI modulated symbols are divided into two groups including a first group and a second group, the mapping situation of each group of the plurality of UCI modulated symbols comprises:
a mapping start position of the first group comprises an RE corresponding to a first symbol of the PUSCH in the time domain and a first subcarrier of a PUSCH bandwidth; and
a mapping start position of the second group comprises an RE corresponding to the first symbol of the PUSCH in the time domain and a last subcarrier of the PUSCH bandwidth.

32. The method according to claim 30, wherein in a case where the plurality of UCI modulated symbols are divided into two groups including a first group and a second group, the mapping situation of each group of the plurality of UCI modulated symbols comprises:
a mapping start position of the first group comprising an RE corresponding to a first symbol of the PUSCH in the time domain and a first subcarrier of a PUSCH bandwidth; and
a mapping start position of the second group comprising an RE corresponding to an (m1+1)-th symbol of the PUSCH in the time domain and a last subcarrier of the PUSCH bandwidth, wherein m1 is a number of UCI modulated symbols comprised in the first group.

33. The method according to claim 30, wherein in a case where the plurality of UCI modulated symbols are divided into two groups including a first group and a second group, the mapping situation of each group of the plurality of UCI modulated symbols comprises:
a mapping start position of the first group comprising an RE corresponding to a first symbol of the PUSCH in the time domain and a last subcarrier of a PUSCH bandwidth; and
a mapping start position of the second group comprises an RE corresponding to an (m2+1)-th symbol of the PUSCH in the time domain and a first subcarrier of the PUSCH bandwidth, wherein m2 is a number of UCI modulated symbols comprised in the first group.

34. The method according to any one of claims 31 to 33, wherein in the case where the plurality of UCI modulated symbols are divided into two groups including the first group and the second group, the mapping situation of each group of the plurality of UCI modulated symbols comprises:
d1 symbols being included in a mapping range of the first group, wherein d1 is a positive integer; and/or
d2 symbols being included in a mapping range of the second group, wherein d2 is a positive integer.

35. The method according to claim 34, wherein the d1 symbols and the d2 symbols do not overlap.

36. The method according to claim 34, wherein d1 is equal to a number of symbols of the PUSCH, and d2 is equal to the number of symbols of the PUSCH.

37. The method according to any one of claims 25 to 36, wherein the UCI comprises Hybrid Automatic Repeat reQuest (HARQ) and/or Channel State Information (CSI).

38. The method according to claim 37, wherein a mapping order of the UCI is: mapping HARQ first, then mapping CSI.

39. The method according to claim 37 or 38, wherein the HARQ comprises legacy HARQ and HARQ related to a neural network system.

40. The method according to claim 37 or 38, wherein the CSI comprises one or more of CSI-RS Resource Indicator (CRI), Rank Indicator (RI), Channel Quality Indicator (CQI), and Precoding Matrix Indicator (PMI).

41. The method according to claim 37 or 38, wherein the CSI comprises one or more of CSI part 1, CSI part 2, and CSI related to a neural network system.

42. The method according to claim 37 or 38, wherein the first mapping pattern of the HARQ is the same as or different from the first mapping pattern of the CSI.

43. The method according to any one of claims 37 to 42, wherein when mapping a CSI modulated symbol, if an RE determined according to the first mapping pattern of the CSI is occupied by an HARQ modulated symbol, mapping the CSI modulated symbol to a next RE.

44. The method according to any one of claims 37 to 41, wherein within a same Resource Block (RB), symbols and subcarriers corresponding to REs to which respective HARQ modulated symbols are mapped are different.

45. The method according to claim 44, wherein the first mapping pattern of the PUSCH in different RBs is the same or different.

46. The method according to claim 44, wherein the first mapping pattern of the PUSCH in different Resource Block Groups (RBGs) is the same or different.

47. The method according to any one of claims 25 to 46, wherein receiving, by the network device, UCI in the PUSCH by using the first mapping pattern comprises:
receiving, by the network device, HARQ in a first transmission layer set of the PUSCH by using the first mapping pattern; and/or
receiving, by the network device, CSI in a second transmission layer set of the PUSCH by using the first mapping pattern;
wherein the first transmission layer set comprises one or more PUSCH transmission layers, and the second transmission layer set comprises one or more PUSCH transmission layers.

48. The method according to any one of claims 25 to 46, wherein in a case where frequency hopping is enabled for the PUSCH, receiving, by the network device, UCI in the PUSCH by using the first mapping pattern comprises:
receiving, by the network device, a first part of modulated symbols of the UCI in a first hop of the PUSCH by using the first mapping pattern; and/or
receiving, by the network device, a second part of modulated symbols of the UCI in a second hop of the PUSCH by using the first mapping pattern.

49. The method according to any one of claims 25 to 48, wherein receiving, by the network device, UCI in the PUSCH by using the first mapping pattern comprises:
receiving, by the network device, UCI by using an advanced receiver.

50. A terminal device, comprising:
a transmission module, configured to transmit uplink control information (UCI) in a Physical Uplink Shared Channel (PUSCH) by using a first mapping pattern, when time-frequency resources of a reference signal overlap with time-frequency resources of the PUSCH.

51. A network device, comprising:
a reception module, configured to receive UCI in a PUSCH by using a first mapping pattern, in a case where time-frequency resources of a reference signal overlap with time-frequency resources of the PUSCH.

52. A terminal device, comprising:
a transceiver, a processor and a memory,
wherein the memory is configured to store a computer program, the transceiver is configured to communicate with other devices, and the processor is configured to call and run the computer program stored in the memory, so that the terminal device performs the method according to any one of claims 1 to 24.

53. A network device, comprising:
a transceiver, a processor and a memory,
wherein the memory is configured to store a computer program, the transceiver is configured to communicate with other devices, and the processor is configured to call and run the computer program stored in the memory, so that the network device performs the method according to any one of claims 25 to 49.

54. A chip, comprising:
a processor, configured to call and run a computer program from a memory, so that a device equipped with the chip performs the method according to any one of claims 1 to 24 or 25 to 49.

55. A computer-readable storage medium, configured to store a computer program, wherein the computer program, when running in a device, causes the device to perform the method according to any one of claims 1 to 24 or 25 to 49.

56. A computer program product comprising computer program instructions, wherein the computer program instructions cause a computer to perform the method according to any one of claims 1 to 24 or 25 to 49.

57. A computer program, wherein the computer program causes a computer to perform the method according to any one of claims 1 to 24 or 25 to 49.

58. A communication system, comprising:
a terminal device, configured to perform the method according to any one of claims 1 to 24; and
a network device, configured to perform the method according to any one of claims 25 to 49.
